# EUROPEAN PATENT SPECIFICATION

(11) **EP 4 158 191 B1**
(45) Date of publication and mention of the grant of the patent: **11.11.2026**
(21) Application number: 21734442.3
(22) Date of filing: 27.05.2021
(51) Int. Cl.: F03G 7/06, G03B 3/10, G03B 5/00, G02B 7/10, G02B 7/02

(54) **ACTUATOR ASSEMBLY**
AKTUATORANORDNUNG
ENSEMBLE ACTIONNEUR

(30) Priority: 27.05.2020 GB 202007948; 19.10.2020 GB 202016549
(43) Date of publication of application: 05.04.2023
(73) Proprietor: Cambridge Mechatronics Limited, Cambridge CB4 0WG (GB)
(72) Inventor: BROWN, Andrew Benjamin Simpson, Cambridge Cambridgeshire CB4 1YG (GB); CARR, Joshua, Cambridge Cambridgeshire CB4 1YG (GB); HART, Oliver, Cambridge Cambridgeshire CB4 1YG (GB)
(74) Representative: Cambridge Mechatronics Limited
(86) International application number: PCT/GB2021/051293
(87) International publication number: WO 2021/240161

(56) References cited:
- GB-A- 2 574 869
- JP-A- S6 234 112

## Description

### Field

The present disclosure relates to an actuator assembly and to a camera system comprising an actuator assembly.

### Background

It is known to use SMA wires in actuators to drive movement of a movable element with respect to a support structure. Such SMA actuators have particular advantages in miniature devices such as smartphones. SMA actuators may be used for example in optical devices such as compact camera modules for driving movement of lenses along their optical axis, for example to effect focussing (e.g. autofocus, AF) or zoom.

For example, WO 2019/243849 A1 describes a SMA actuation apparatus which comprises a support structure and a movable element. A helical bearing arrangement supported on the movable element on the support structure guides helical movement of the movable element with respect to the support structure around a helical axis. At least one shape memory alloy actuator wire is connected between the support structure and the movable element in, or at an acute angle to, a plane normal to the helical axis, so as to drive rotation of the movable element around the helical axis which the helical bearing arrangement converts into said helical movement.

Manufactured tolerances can cause misalignment of the components of the actuation apparatus, for example misalignment of the moveable element and support structure. It would be desirable to reduce misalignment of the components of the actuation apparatus caused by manufacturing tolerances and/or increase the movement of the moveable element for a given movement of actuator wire.

JPS6234112A discloses a lens barrel used in an optical device or the like, specifically, a lens barrel having a cam mechanism.

### Summary

According to a first aspect of the present invention, there is provided an actuator assembly comprising: a first part; a second part; and, a helical bearing arrangement arranged to guide helical movement of the second part with respect to the first part around a helical axis, the helical bearing arrangement comprising first and second helical bearings, wherein the first helical bearing comprises a first track and a first bearing element received in the first track and the second helical bearing comprises a second track and second bearing element received in the second track, and wherein the first and second bearing elements are offset in a direction along the helica axis that increases the distance between the first and second bearing elements compared to a situation in which the first and second bearing elements are not offset in a direction along the helical axis. The first track and the second track overlap in the direction along the helical axis. So, a plane perpendicular tc the helical axis intersects both the first track and the second track.

In some embodiments, the actuator assembly is an SMA actuator assembly. In some embodiments, the actuator assembly is a miniature actuator assembly. The actuator assembly may be an SMA microactuator assembly.

The first and second bearings will generally permit an amount of tilt between the first and second parts due to manufacturing tolerances. The first and second bearing elements being offset in the specified way helps to reduce an amount of tilt between the first and second parts that may be introduced due to manufacturing tolerances of the first and second parts.

The actuator assembly is configured such that the first and second bearing elements are offset throughout at least part of the range of the helical movement.

In some embodiments, only a single bearing element in the first track constrains movement of the second part relative to the first part in at least a first direction.

In some embodiments, the first track comprises faces, wherein the first bearing element engages both of the faces simultaneously to constrain movement of the second part relative to the first part in the first direction, and wherein no further bearing elements in the first track engage both of the faces simultaneously. The faces may be disposed on the first and second parts respectively. The two faces of the first track may be at least partly opposing. The first track may comprise further faces.

In some embodiments, only a single bearing element in the second track constrains movement of the second part relative to the first part in at least a second direction.

In some embodiments, the second track comprises faces, wherein the second bearing element engages both of the faces simultaneously to constrain movement of the second part relative to the first part in the second direction, and wherein no further bearing elements in the second track engage both of the faces simultaneously. The faces may be disposed on the first and second parts respectively. The two faces of the second track may be at least partly opposing. The second track may comprise further faces.

In some embodiments, the first helical bearing itself permits, i.e. does not constrain, rotational movement of the second part relative to the first part about at least a first axis of rotation, and the second helical bearing itself permits, i.e. does not constrain, rotational movement of the second part relative to the first part about at least a second axis of rotation.

In some embodiments, the helical bearing arrangement constrains rotational movement of the second part relative to the first part about the first and second axes of rotation.

In some embodiments, the helical bearing arrangement further comprises a third helical bearing comprising a third track and a third bearing element received in the third track. The third track may overlap with the first and/or second track in the direction along the helical axis. So, a plane perpendicular to the helical axis may intersect both the third track and the first and/or second track.

In some embodiments, the first and/or second bearing element is offset from the third bearing element in a direction along the helical axis that increases the distance between the first and/or second bearing element and the third bearing element. The distance between the third bearing element and the first and/or second bearing element is increased compared to a situation in which the third bearing element is not offset from the first and/or second bearing element in a direction along the helical axis. Again, this helps to reduce the amount of tilt of the second part relative to the first.

In some embodiments, the first helical bearing is spaced apart from the second helical bearing by a first angle about the helical axis, and the third helical bearing is spaced apart from the second helical bearing by a second angle about the helical axis substantially equal to the first angle.

In some embodiments, only a single bearing element in the third track constrains movement of the second part relative to the first part in at least a third direction.

In some embodiments, the second helical bearing itself permits, i.e. does not constrain, rotational movement of the second part relative to the first part about at least a third axis of rotation, and the third helical bearing itself permits, i.e. does not constrain, rotational movement of the second part relative to the first part about at least a fourth axis of rotation.

In some embodiments, the helical bearing arrangement constrains rotational movement of the second part relative to the first part about the third and fourth axes of rotation.

In some embodiments, the third helical bearing comprises one bearing element in total.

In some embodiments, the first helical bearing comprises one bearing element in total.

In some embodiments, the second helical bearing comprises one bearing element in total.

In some embodiments, the first and third bearing elements are offset from the second bearing element in opposite directions along the helical axis.

In some embodiments, the actuator assembly further comprises a fourth bearing element.

In some embodiments, the fourth bearing element is received in a track of the actuator assembly. In some embodiments, the fourth bearing elements is received in the second track of the actuator assembly. In other embodiments, the fourth bearing element is received in the first or third track, or is received in a fourth track of the actuator assembly. The fourth track may overlap with the first, second and/or third track in the direction along the helical axis. So, a plane perpendicular to the helical axis may intersect both the fourth track and the first, second and/or fourth track.

In some embodiments, the second helical bearing comprises the fourth bearing element.

In some embodiments, the fourth bearing element constrains movement of the second part relative to the first part in a fourth direction. The first and second directions may be different to the third and fourth directions. The first and second directions may be substantially opposite directions and the third and fourth directions may be substantially opposite directions.

In some embodiments, the third and fourth bearing elements are offset in a direction along the helical axis that increases the distance between the third and fourth bearing elements. The distance between the third bearing element and the fourth bearing element is increased compared to a situation in which the third and fourth bearing elements are not offset in a direction along the helical axis. Again, this helps to reduce the amount of tilt of the second part relative to the first.

In some embodiments in which the second helical bearing comprises the second and fourth bearing elements, the fourth bearing element will be offset from the second bearing element in one direction along the helical axis, and the first bearing element is offset from the second bearing element in the same direction along the helical axis and the third bearing element is offset from the fourth bearing element in the opposite direction along the helical axis. This arrangement can help to maximise the offsets while minimising any increase in the size of the actuator along the helical axis.

In some embodiments, one of the first and third helical bearings provides one degree of freedom of constraint with a single bearing element, the other one of the first and third helical bearings provides two degrees of freedom of constraint with a single bearing element, and the second helical bearing provides two degrees of freedom of constraint with two bearing elements, i.e. the second and fourth bearing elements.

In some embodiments, a first bearing region is provided on the first part and a second bearing region is provided on the second part, wherein the second track is provided between the first and second bearing regions.

In some embodiments, the first bearing region comprises first and second bearing faces and the second bearing region comprises first and second bearing faces.

In some embodiments, the first bearing faces generally oppose each other and the second baring faces generally oppose each other.

In some embodiments, the first bearing faces are configured to abut the second bearing element.

In some embodiments, a first bearing region is provided on the first part and a second bearing region is provided on the second part, wherein the first track is provided between the first and second bearing regions. In some embodiments, the first bearing region comprises first and second bearing faces and the second bearing region comprises first and second bearing faces. In some embodiments, the first bearing faces generally oppose each other and the second baring faces generally oppose each other. In some embodiments, the first bearing faces are configured to abut the first bearing element.

In some embodiments, a first bearing region is provided on the first part and a second bearing region is provided on the second part, wherein the third track is provided between the first and second bearing regions. In some embodiments, the first bearing region comprises first and second bearing faces and the second bearing region comprises first and second bearing faces. In some embodiments, the first bearing faces generally oppose each other and the second baring faces generally oppose each other. In some embodiments, the first bearing faces are configured to abut the third bearing element.

In some embodiments, the second bearing faces are configured to abut the fourth bearing element.

In some embodiments, the first bearing faces extend along a first portion of the second track.

In some embodiments, a first width of the second track is greater than a width of the second bearing element in a second portion of the second track.

In some embodiments, the first portion extends along one part of the length of the track and the second portion extends along another part of the length of the track. The first and second portions may not overlap, or may only partially overlap, in a direction along the helical axis.

In some embodiments, the first bearing region comprises a recess and/or the second bearing region comprises a recess configured to increase the first width of the second track.

In some embodiments, the or each recess is provided in the second portion of the track. In some embodiments, the or each recess is arranged such that the second bearing element does not contact both of the first faces of the second track simultaneously.

In some embodiments, a second width of the second track is greater than a width of the fourth bearing element in the first portion of the second track.

In some embodiments, the fourth bearing element is smaller than the second bearing element.

In some embodiments, the second bearing faces extend along the second portion of the second track.

In some embodiments, the first bearing region comprises a recess and/or the second bearing region comprises a recess configured to increase the second width of the second track.

In some embodiments, the or each recess is provided in the first portion of the second track. In some embodiments, the or each recess is arranged such that the fourth bearing element does not contact both of the second faces of the second track simultaneously.

In some embodiments, the actuator assembly further comprises one or more positioning elements that are located in one or each of the tracks.

The positioning elements help to define the position of the bearing elements within the respective track.

In some embodiments, at least one of the positioning elements comprises a positioning ball bearing that has a smaller diameter than the bearing element of the track in which the positioning element is located.

In some embodiments, at least a portion of the second part is received between the first and second bearing elements.

In some embodiments, the first part comprises a support structure.

In some embodiments, the second part comprises a movable part, such as a moveable mount and, preferably, a movable lens mount.

In some embodiments, the actuator assembly comprises a drive mechanism configured to drive rotation of the second part around the helical axis which the helical bearing arrangement converts into the helical movement of the second part.

In some embodiments, the actuator assembly is a shape memory alloy actuator.

The first, second, third and/or fourth bearings may be rolling bearings, such as ball bearings. The first, second, third and/or further bearing elements may be rolling bearing elements, such as balls.

According to a first example not covered by the claims, there is provided an actuator assembly comprising: a first part; a second part; a helical bearing arrangement arranged to guide helical movement of the second part with respect to the first part about a helical axis; and, a drive mechanism comprising two or more lengths of SMA wire that are each connected between the first and second parts, wherein each length of SMA wire is inclined relative to a plane normal to the helical axis in such a way as to increase the rotation of the second part relative to the first part per unit change in length of the length of SMA wire. The rotation of the second part relative to the first part per unit change in length of the length of SMA wire is increased relative to a situation in which each length of SMA wire is not inclined relative to the plane normal to the helical axis.

In particular, the helical bearing arrangement may guide helical movement of the second part with respect to the first part about the helical axis and along a helical path. Each length of SMA wire may be inclined relative to the plane normal to the helical axis in such a way as to increase the angle between the SMA wire and the helical path. The angle between the SMA wire and the helical path is increased compared to a situation in which the SMA wires are not inclined relative to the plane normal to the helical axis.

Thus, the pitch of the helical movement can be decreased while maintaining the displacement of the movable part along the helical axis per unit change in length of the length of SMA wire. Decreasing the pitch also helps to reduce an amount of tilt between the first and second parts that may be introduced due to manufacturing tolerances of the first and second parts. Alternatively or additionally, the effect can be used to increase the displacement of the movable part along the helical axis per unit change in length of the length of SMA wire.

In particular, the second part is moveable relative to the first part about a range of helical movement, wherein the two or more lengths of SMA wire are inclined relative to the plane normal to the helical axis in such a way as to increase the rotation of the second part relative to the first part per unit change in length of the length of SMA wire at least when the second part is at the mid-point of the range of range of helical movement. That is, the second part is moveable relative to the first part between two extreme positions, the mid-point being located halfway between the extreme positions. In some embodiments, the or each wire angle (i.e. the angle at which the length of SMA wire is inclined relative to the plane normal to the helical axis) is measured at said mid-point of the range of helical movement.

In particular, each length of SMA wire is not coincident with or parallel to the plane normal to the helical axis, is not inclined relative to the plane normal to the helical axis at the same angle as a tangent to a helical path corresponding to the helical movement of a point on the second part from which the length of SMA wire extends, and does not extend from the second part at an angle between the plane and the tangent.

In particular, each length of SMA wire produces substantially the same rotation of the second part relative to the first part per unit change in length of the length of SMA wire.

In particular, the helical movement of the second part relative to the first part has a helical pitch of less than 300 mm and, preferably, less than 200 mm, less than 100 mm, less than 90 mm, less than 80 mm, less than 70 mm, less than 60 mm or less than 50 mm.

The pitch refers to the amount of axial movement of the second part relative to the first part for one 360-degree rotation of the second part relative to the first part.

In particular, the helical movement of the second part relative to the first part has a helix angle of at least 10 degrees at a radius of 8 mm and, preferably at least 15 or 20 degrees at a radius of 8 mm.

In particular, the helix angle being at least 10 degrees and, preferably, at least 15 or 20 degrees, reduces an amount of tilt between the first and second parts that may be introduced due to manufacturing tolerances of the first and second parts.

In particular, the helical movement of the second part relative to the first part has a helix angle of less than or equal to 45 degrees at a radius of 8 mm and, preferably less than or equal to 40 or 35 degrees at a radius of 8 mm.

In particular, each length of SMA wire extends from the second part at a wire angle, and wherein each wire angle is at least 3 degrees and, preferably, is at least 5, 6, 9, 12 or 15 degrees.

In particular, each length of SMA wire extends from the second part at the same wire angle. In other embodiments, one or more of the lengths of SMA wire extends from the second part at a different wire angle to at least one other length of SMA wire.

In particular, the second part is moveable relative to the first part about a range of helical movement, wherein the wire angle is measured with the second part at the mid-point of the range of range of helical movement. That is, the second part is moveable relative to the first part between two extreme positions, the mid-point being located halfway between the extreme positions.

In particular, the drive mechanism is configured to move the second part relative to the first part between first and second extreme positions, wherein the first and second extreme positions are spaced along the helical axis by at least 0.2 mm and, preferably, at least 0.5 mm, at least 1 mm, at least 2 mm, at least 3 mm or more.

In particular, the two or more lengths of SMA wire include first and second lengths of SMA wire, wherein the first length of SMA wire is configured to reduce in length to drive rotation of the second part relative to the first part in a first rotational direction, and wherein the second length of SMA wire is configured to reduce in length to drive rotation of the second part relative to the first part in a second rotational direction, opposite to the first rotational direction.

In particular, the first length of SMA wire extends from the second part (partly in one direction along the helical axis) towards a first end of the first part, and wherein the second length of SMA wire extends from the second part (partly in the other direction along the helical axis) towards a second end of the first part.

In particular, the actuator assembly according to the second aspect has one or more of the features of the actuator assembly of the first aspect.

According to a second aspect of the present invention, there is provided an autofocus system comprising the actuator assembly of the first aspect or the first example.

According to a third aspect of the present invention, there is provided a camera system comprising: the actuator assembly according to the first aspect or the first example; an image sensor; and a lens system, wherein the image sensor is mounted to one of the first part and the second part, and
wherein the lens system is mounted to the other one of the first part and second part.

### Brief Description of the Drawings

Certain embodiments of the present invention will now be described, by way of example only, with reference to the accompanying drawings, in which:
Fig. 1 is a schematic view of an SMA actuation apparatus that is a camera;
Figs. 2 and 3 are perspective views of two helical bearings;
Figs. 4 and 5 are schematic cross-sectional views of the SMA actuation apparatus with different possible helical bearing arrangements;
Fig. 6 is a perspective view of the SMA actuation apparatus with another possible helical bearing arrangement;
Figs. 7 and 8 are schematic side views of the SMA actuator apparatus including an SMA actuator wire extending at two different angles;
Figs. 9 and 10 are schematic plan views of the SMA actuator apparatus with different arrangements of SMA actuator wire and a resilient biasing element;
Fig. 11 is a plan view of an actuator assembly according to a first embodiment;
Fig. 12 is a perspective view of the actuator assembly of Fig. 11;
Fig. 13 is a close-up plan view of a first helical bearing of the actuator assembly of Fig. 11;
Fig. 14 is a close-up plan view of a second helical bearing of the actuator assembly of Fig. 11;
Fig. 15 is a close-up plan view of a third helical bearing of the actuator assembly of Fig. 11;
Fig. 16 is a perspective view of a second part of the actuator assembly of Fig. 11;
Fig. 17 is a perspective view of a first part of the actuator assembly of Fig. 11;
Fig. 18 is a schematic cross-sectional side view of the first and second helical bearing of the actuator assembly of Fig. 11, wherein the first and second parts are ideal sizes;
Fig. 19 is a schematic cross-sectional side view of the first and second helical bearing of the actuator assembly of Fig. 11, wherein the second part is tilted relative to the first part due to manufacturing tolerances;
Fig. 20 is a schematic cross-sectional side view of the first and second helical bearing of the actuator assembly shown for information purposes, wherein the first and second parts are ideal sizes;
Fig. 21 is a schematic cross-sectional side view of the first and second helical bearing of the actuator assembly shown for information purposes, wherein the second part is tilted relative to the first part due to manufacturing tolerances;
Fig. 22 is a schematic cross-sectional side view of the second helical bearing of the actuator assembly of Fig. 11;
Fig. 23 is a schematic cross-sectional side view of the first helical bearing of the actuator assembly of Fig. 11;
Fig. 24 is a schematic cross-sectional side view of the third helical bearing of the actuator assembly of Fig. 11;
Fig. 25 is a schematic cross-sectional side view of the first helical bearing of the actuator assembly of Fig. 11, showing positioning elements within the track of the first helical bearing;
Fig. 26 to 31 show a first example of an actuator assembly not forming part of the present invention.

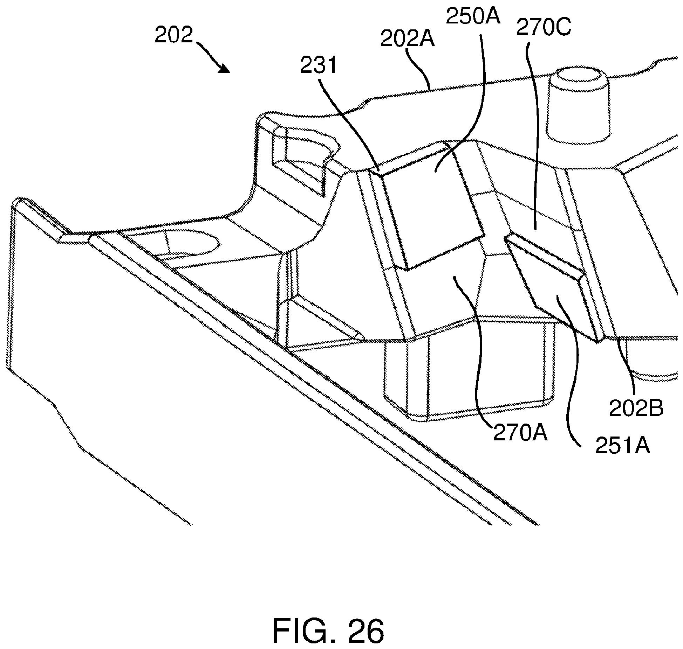

Fig. 26 is a perspective view of a portion of a first part of an actuator assembly;

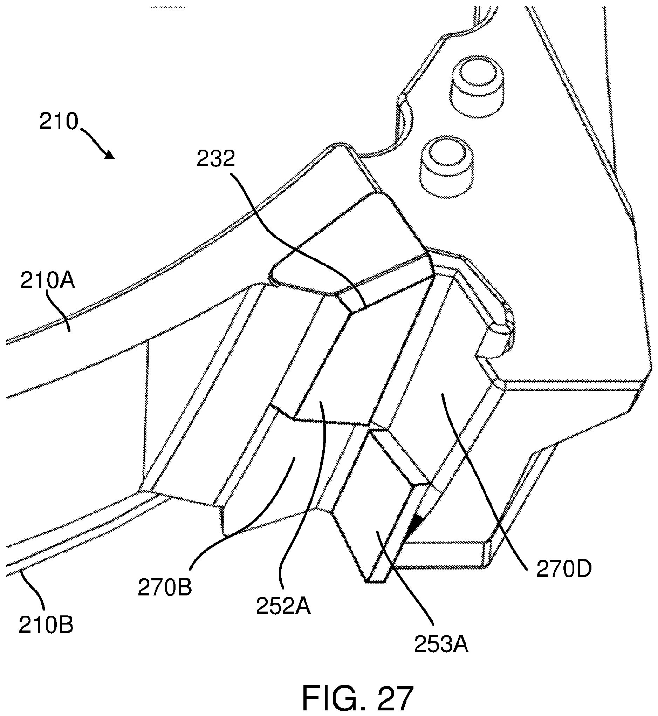

Fig. 27 is a perspective view of a portion of a second part of an actuator assembly;

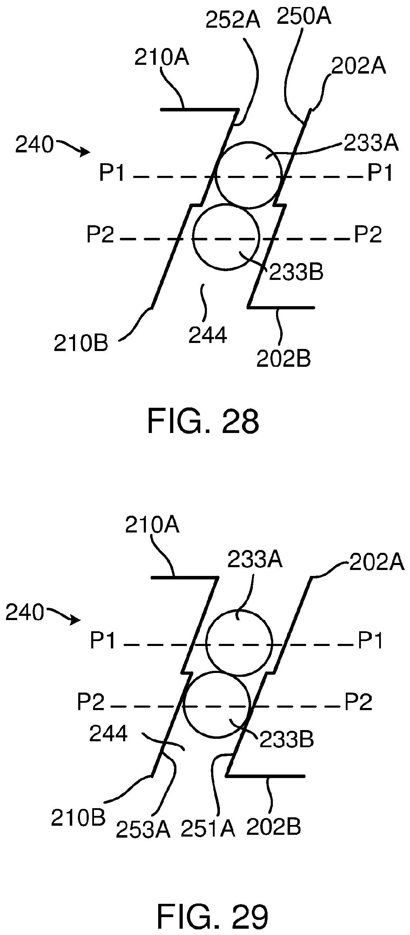

Fig. 28 is a schematic cross-sectional side view of a second helical bearing of the actuator assembly;
Fig. 29 is a second schematic cross-sectional side view of a second helical bearing of the actuator assembly, perpendicular to the view of Fig. 28;

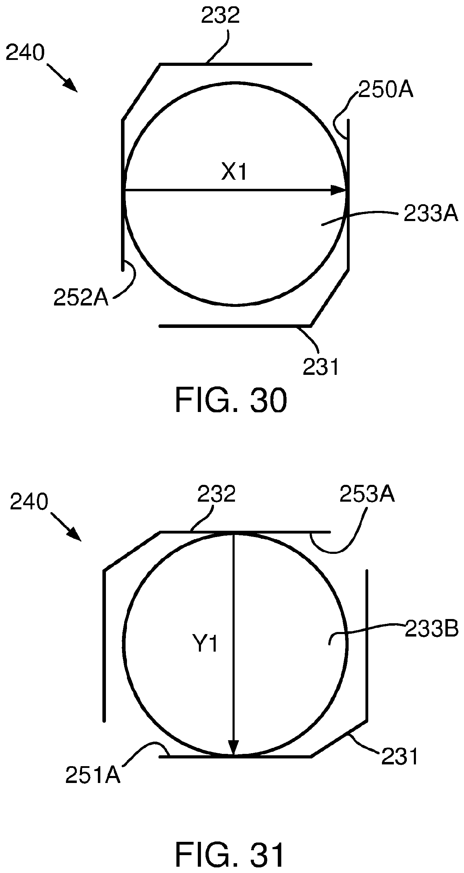

Fig. 30 is a schematic cross-sectional plan view of the second helical bearing of the actuator assembly, along the plane P1-P1 shown in Fig. 28;
Fig. 31 is a schematic cross-sectional plan view of the second helical bearing of the actuator assembly, along the plane P2-P2 shown in Fig. 28;

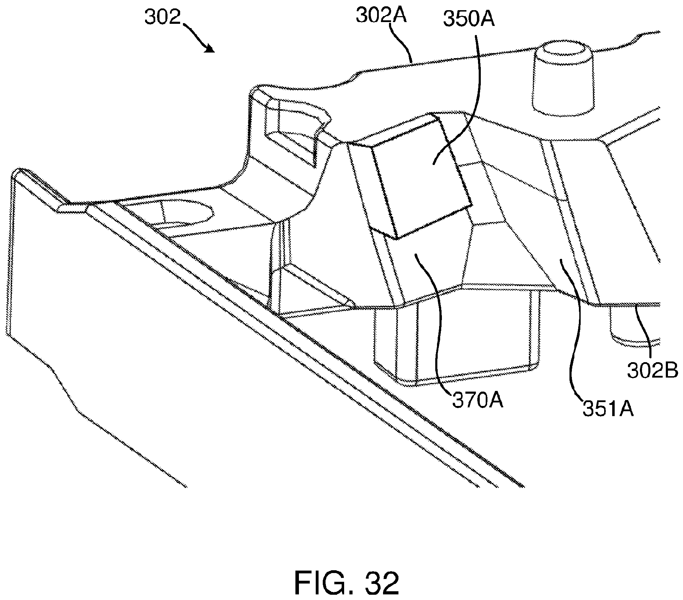

Fig. 32 is a perspective view of a portion of a first part of an actuator assembly according to a second embodiment;

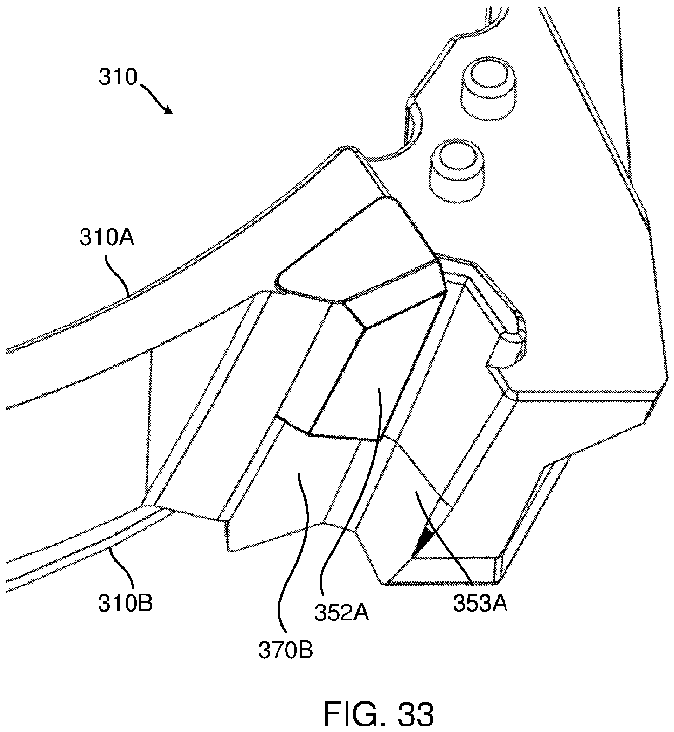

Fig. 33 is a perspective view of a portion of a second part of an actuator assembly according to the second embodiment;

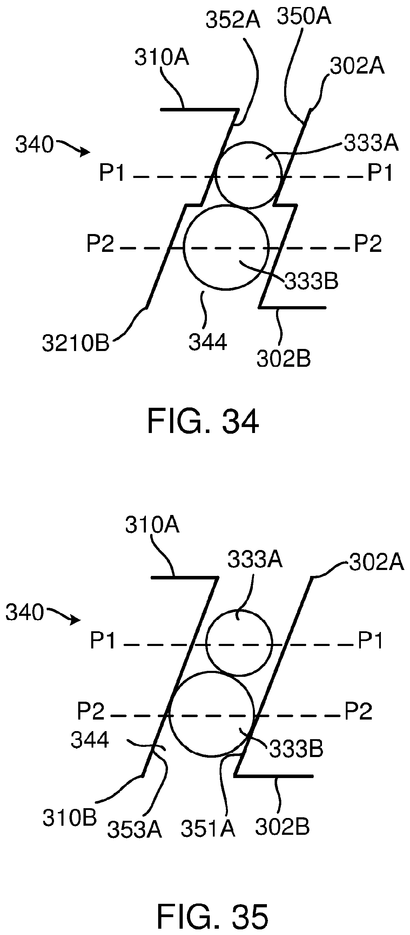

Fig. 34 is a schematic cross-sectional side view of a second helical bearing of the actuator assembly of the second embodiment;
Fig. 35 is a second schematic cross-sectional side view of the second helical bearing of the actuator assembly of the second embodiment perpendicular to the view of Fig. 34;

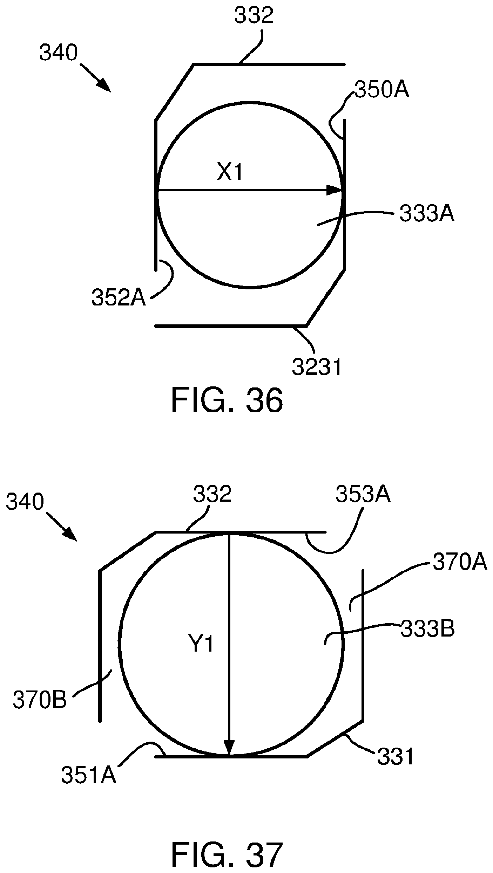

Fig. 36 is a schematic cross-sectional plan view of the second helical bearing of the actuator assembly of the second embodiment, along the plane P1-P1 shown in Fig. 34;
Fig. 37 is a schematic cross-sectional plan view of the second helical bearing of the actuator assembly of the second embodiment, along the plane P2-P2 shown in Fig. 34; and,

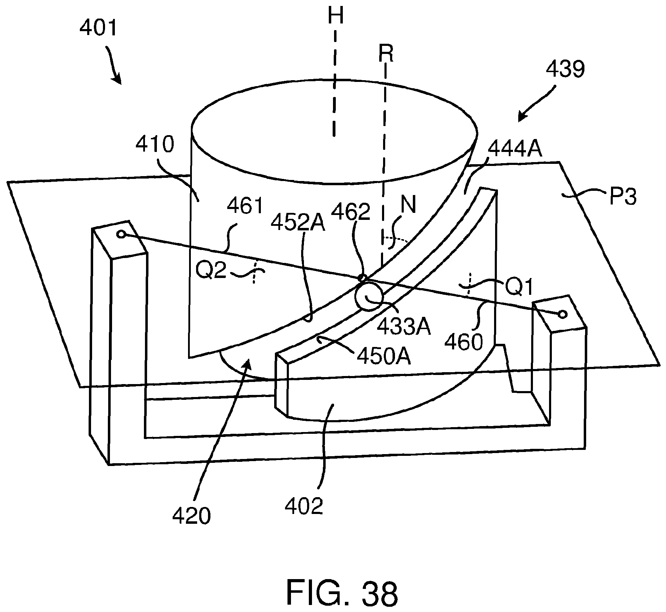

Fig. 38 to 41 show a second example of an actuator assembly not forming part of the present invention.
Fig. 38 is a schematic perspective side view of an actuator assembly;

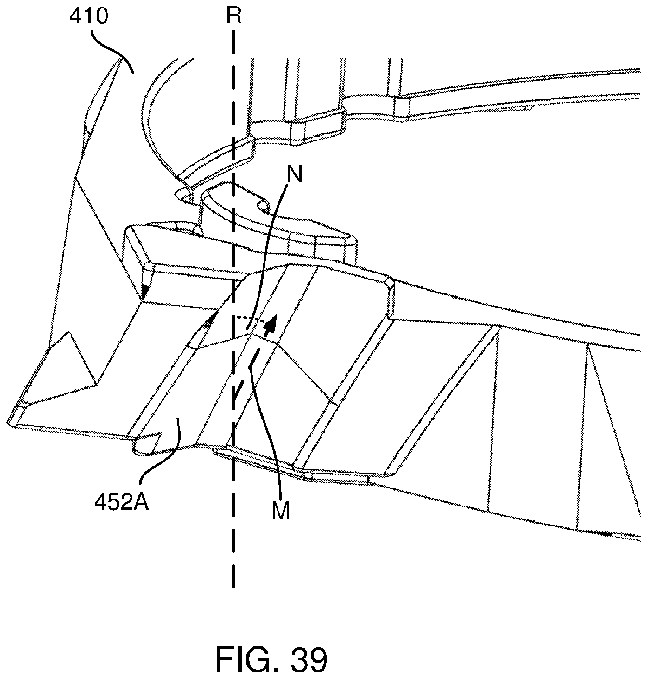

Fig. 39 is a perspective view of a portion of a second part of the actuator assembly;

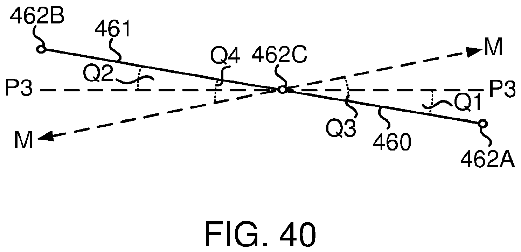

Fig. 40 is a schematic side view of first and second SMA actuator wires of the actuator assembly; and,

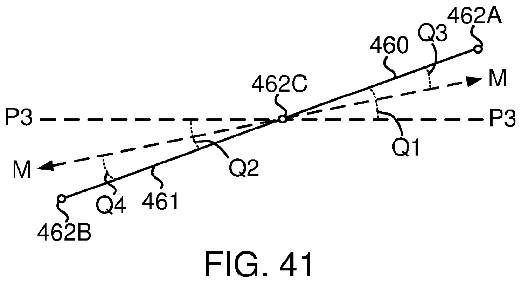

Fig. 41 is a schematic side view of first and second SMA actuator wires of a third example not forming part of the invention.

### Detailed Description

Except where the context requires otherwise, the term "bearing" is used herein as follows. The term "bearing" is used herein to encompass the terms "sliding bearing", "plain bearing", "rolling bearing", "ball bearing", "roller bearing", an "air bearing" (where pressurised air floats the load) and "flexure". The term "bearing" is used herein to generally mean any element or combination of elements that functions to constrain motion to only the desired motion and reduce friction between moving parts. The term "sliding bearing" is used to mean a bearing in which a bearing element slides on a bearing surface or face, and includes a "plain bearing". The term "rolling bearing" is used to mean a bearing in which a rolling bearing element, for example a ball or roller, rolls on a bearing surface or face. Such a rolling bearing element may be a compliant element, for example a sac filled with gas. In embodiments, the bearing may be provided on, or may comprise, non-linear bearing surfaces.

In some embodiments of the present techniques, more than one type of bearing element may be used in combination to provide the bearing functionality. Accordingly, the term "bearing" used herein includes any combination of, for example, plain bearings, ball bearings, roller bearings and flexures.

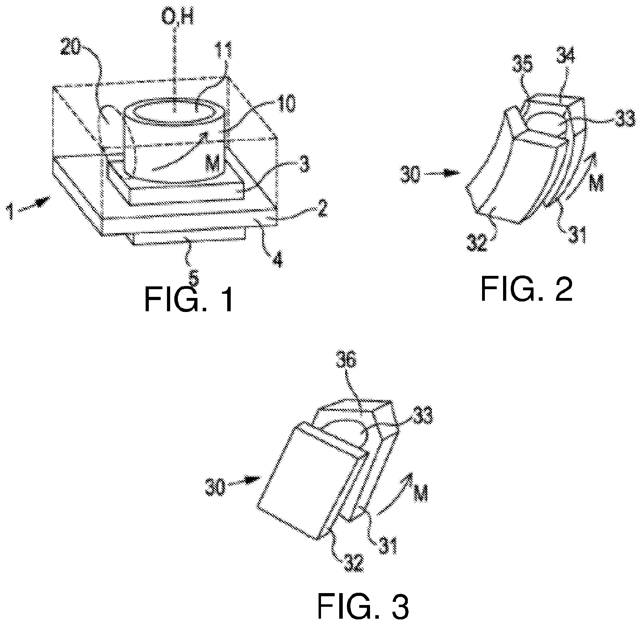

A shape memory alloy (SMA) actuation apparatus 1 that is a camera is shown schematically in Fig. 1.

The SMA actuation apparatus 1 comprises a support structure 2 that has an image sensor 3 mounted thereon. The support structure 2 may take any suitable form, typically including a base 4 to which the image sensor is fixed. The support structure 2 may also support an IC chip 5. The SMA actuation apparatus 1 also comprises a lens element 10 that is the movable element in this example. The lens element 10 comprises a lens 11, although it may alternatively comprise plural lenses. The lens element 10 has an optical axis O aligned with the image sensor 3 and is arranged to focus an image on the image sensor 3.

The SMA actuation apparatus 1 is a miniature device. In some examples of a miniature device, the lens 11 (or plural lenses, when provided) may have a diameter of at most 20mm, preferably at most 15mm, preferably at most 10mm.

Although the SMA actuation apparatus 1 in this example is a camera, that is not in general essential. In some examples, the SMA actuation apparatus 1 may be an optical device in which the movable element is a lens element but there is no image sensor. In other examples, SMA actuation apparatus 1 may be a type of apparatus that is not an optical device, and in which the movable element is not a lens element and there is no image sensor. Examples include apparatuses for depth mapping, face recognition, game consoles, projectors and security scanners.

The SMA actuation apparatus 1 also comprises a helical bearing arrangement 20 (shown schematically in Fig. 1) that supports the lens element 10 on the support structure 2. The helical bearing arrangement 20 is arranged to guide helical movement of the lens element 10 with respect to the support structure 2 around a helical axis H. The helical axis H in this example is coincident with the optical axis O and the helical movement is shown in Fig. 1 by the arrow M. Preferably, the helical motion is along a right helix, that is a helix with constant radius, but in general any helix is possible. The pitch of the helix may be constant or vary along the helical motion. Preferably, the helical movement is generally only a small portion (less than one quarter) of a full turn of the helix.

The helical motion of the lens element 10 guided by the helical bearing arrangement 20 includes a component of translational movement along the helical axis H and rotational movement around the helical axis H. The translational movement along the helical axis H is the desired movement of the lens element 10, for example to change the focus of the image on the image sensor 3 and/or to change the magnification (zoom) of the image on the image sensor 3. The rotational movement around the helical axis H is in this example not needed for optical purposes, but is in general acceptable as rotation of the lens element 10 does not change the focus of the image on the image sensor 3.

The helical bearing arrangement 20 may take a variety of forms.

One possibility is that the helical bearing arrangement 20 comprises one or more helical bearings 30 that are rolling bearings, examples of which are shown in Figs. 2 and 3. In each of Figs. 2 and 3, the helical bearing 30 comprises a pair of bearing surfaces 31 and 32 and plural rolling bearing elements 33, for example balls, disposed between the bearing surfaces 31 and 32. One of the bearing surfaces 31 and 32 is provided on the support structure 2 and the other of the bearing surfaces 31 and 32 is provided on the lens element 10.

The helical bearing 30 guides the helical movement of the lens element 10 with respect to the support structure 2 as shown by the arrow M. This may be achieved by the bearing surfaces 31 and 32 extending helically around the helical axis H, that is following a line that is helical. In practical embodiments, the length of the bearing surfaces 31 and 32 may be short compared to the distance of the bearing surfaces 31 and 32 from the helical axis H, such that their shape is close to straight or even each being straight, provided that the one or more helical bearings of the helical bearing arrangement 20 guide helical movement of the lens element 10 with respect to the support structure 2. Plural helical bearings 30 are typically present, located at different angular positions around the helical axis H, in which case the helical bearings 30 have different orientations so that they cooperate and maintain adequate constraints to guide the helical movement of the lens element 10 with respect to the support structure 2, even if the bearing surfaces 31 and 32 of an individual helical bearing 30 are straight.

In the example of Fig. 2, the bearing surfaces 31 and 32 each comprise respective grooves 34 and 35 in which the rolling bearing elements 33 are seated. In this example, the grooves 34 and 35 constrain transverse translational movement of the lens element 10 with respect to the support structure 2, that is transverse to the direction of movement shown by arrow M. The grooves shown in figure 2 are V-shaped in cross-section, but other cross-sections are possible, for example curved as in portions of a circle or an oval. In general, the grooves 34 and 35 provide two points of contact with the respective rolling bearing elements 33. The grooves 34 and 35 may extend helically. Alternatively, in practical embodiments, the length of the bearing surfaces 31 and 32 may be short compared to the distance of the bearing surfaces 31 and 32 from the helical axis H, in which case the grooves 34 and 35 may be straight or close to straight, provided that the one or more helical bearings 30 of the helical bearing arrangement 20 guide helical movement of the lens element 10 with respect to the support structure 2.

In the example of Fig. 3, a first bearing surface 31 comprises a groove 36 in which the rolling bearing elements 33 are seated and a second bearing surface 32 wherein the bearing surface is 'planar'. The first bearing surface 31 comprising a groove 36 may be provided on either one of the support structure 2 and the lens element 10, with the second bearing surface 32 being provided on the other one of the support structure 2 and the lens element 10. In the example of Fig. 3, the helical bearing 30 does not constrain transverse translational movement of the lens element 10 with respect to the support structure 2, that is transverse to the direction of movement shown by arrow M. The bearing surface 32 is 'planar' in the sense that it is a surface which is not a groove and one which provides only a single point of contact with the ball. In other words, the bearing surface 32 is effectively planar across a scale of the width of the rolling bearing element 33, although be helical at a larger scale. For example, as pictured, the 'planar' surface is helical, being a line in cross section which twists helically along the movement direction, maintaining a single point of contact with the ball at any time. Alternatively and as mentioned above, in practical embodiments the length of the bearing surfaces 31 and 32 may be short, in which case the bearing surface 32 may be planar or close to planar, provided that the one or more helical bearings 30 of the helical bearing arrangement 20 guide helical movement of the lens element 10 with respect to the support structure 2.

A single rolling bearing element 33 is shown in Figs. 2 and 3 by way of example, but in some embodiments may comprise any plural number of rolling bearing elements 33 as will be described in more detail below.

The helical bearing arrangement may in general comprise any number of helical bearings 30 with a configuration chosen to guide the helical movement of the lens element 10 with respect to the support structure 2 while constraining the movement of the lens element 10 with respect to the support structure 2 in other degrees of freedom. Many helical bearing arrangements may comprise plural helical bearings 30 and at least one which comprises plural rolling bearing elements 30, as will be explained in more detail below.

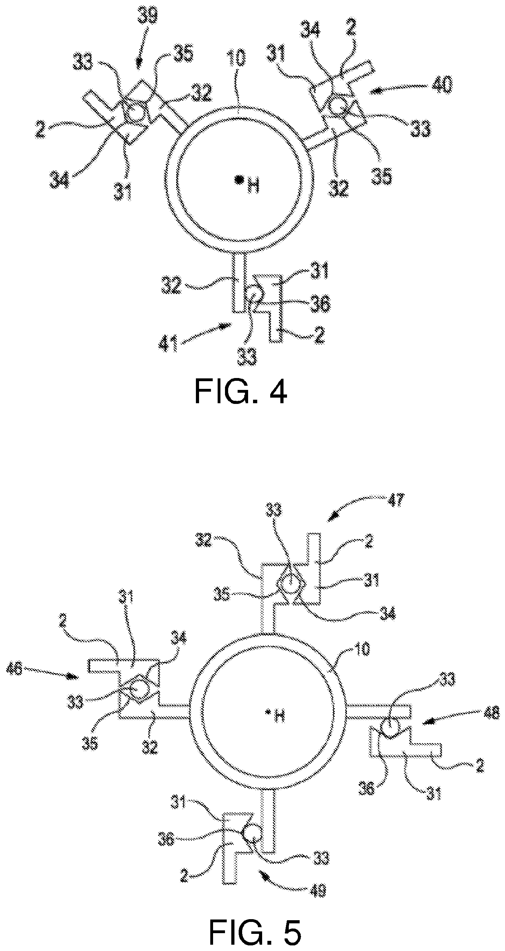

Some specific examples of the SMA actuation apparatus 1 with different possible helical bearing arrangements are illustrated in Figs. 4 to 5 which are schematic plan views normal to the helical axis showing the support structure 2, the lens element 10 and the helical bearings 30.

Fig. 4 illustrates a possible helical bearing arrangement that includes three helical bearings 39, 40 and 41 only. The three helical bearings 39, 40 and 41 are equally angularly spaced around the helical axis H, but they could alternatively be spaced unequally.

The first and second helical bearings 39 and 40 are of the same type as the helical bearing 30 shown in Fig. 2 wherein the bearing surfaces 31 and 32 each comprise respective grooves 34 and 35. The third helical bearing 41 is of the same type as the helical bearing 30 shown in Fig. 3 wherein the first bearing surface 31 comprises a groove 36 in which a rolling bearing element 33 is seated and the second bearing surface 32 is planar. Fig. 5 illustrates the case that the first bearing surface 31 of the third helical bearing 41 is on the lens element 10, but it could alternatively be on the support structure 2.

Each of the three helical bearings 39, 40 and 41 comprises a single rolling bearing element 33. The constraints imposed by three helical bearings 39, 40 and 41, and in particular the grooves of the first and second helical bearings 39 and 40 sufficient to constrain the movement of the lens element 10 with respect to the support structure 2 in degrees of freedom other than the helical movement.

Fig. 5 illustrates another possible helical bearing arrangement that includes four helical bearings 46 to 49 only. The four helical bearings 46 to 49 are equally angularly spaced around the helical axis H, but they could alternatively be spaced unequally.

The first and second helical bearings 46 and 47 are of the same type as the helical bearing 30 shown in Fig. 2 wherein the bearing surfaces 31 and 32 each comprise respective grooves 34 and 35.

The third and fourth helical bearings 48 and 49 are of the same type as the helical bearing 30 shown in Fig. 3 wherein the first bearing surface 31 comprises a groove 36 in which a rolling bearing element 33 is seated and the second bearing surface 32 is planar. Fig. 5 illustrates the case that the first bearing surface 31 of the third and fourth helical bearings 48 and 49 is on the lens element 10, but it could alternatively be on the support structure 2.

Each of the four helical bearings 46 to 49 comprises a single rolling bearing element 33. The constraints imposed by four helical bearings 46 to 49 are sufficient to constrain the movement of the lens element 10 with respect to the support structure 2 in degrees of freedom other than the helical movement.

In each of the helical bearing arrangements of Figs. 4 and 5, the bearing surfaces 32 which are on the lens element 10 are each arranged on the same side of (all above or all below) the bearing surfaces 31 on the support structure 2. As the bearing surfaces 31 and 32 extend helically, this means that in the view of Fig. 4 which is a cross-section perpendicular to the helical axis H, all the bearing surfaces 32 which are on the lens element 10 are on the right of the bearing surfaces 31 on the support structure 2 as viewed outwardly of the helical axis H, and in the view of Figs. 5 all the bearing surfaces 32 which are on the lens element 10 are on the left of the bearing surfaces 31 on the support structure 2 as viewed outwardly of the helical axis H. As a result of this arrangement, the helical bearings all the bearing surfaces 31 on the support structure 2 face in the same direction as each other, which assists in manufacture of the bearing surfaces 31 by the same tool. Similarly, manufacturing advantages apply to the bearing surfaces 32 on the lens element 2 which also face in the same direction as each other.

As a result of this arrangement, all the helical bearings 30 need to be loaded in the same helical sense. Thus loading of the helical bearings 30 may be provided by applying a loading force along the helical axis H, a loading force around the helical axis H, or a combination thereof. In the arrangements described in more detail below, this loading force may be applied by the resilient biasing element 70 which resiliently biases the at least one SMA actuator wire 60.

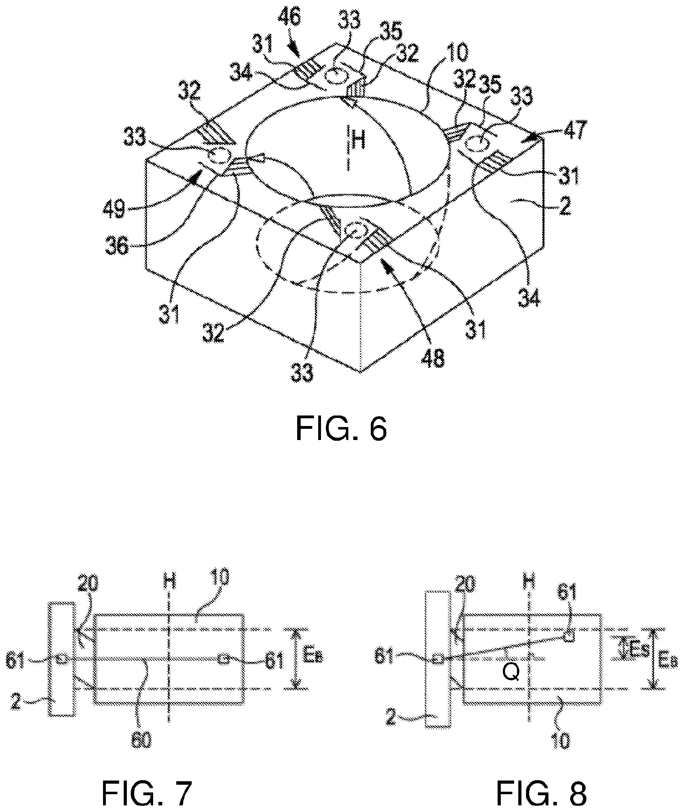

Fig. 6 illustrates another possible helical bearing arrangement that is a modification of the helical bearing arrangement of Fig. 5. Thus, the helical bearing arrangement includes four helical bearings 46 to 49 only, and the four helical bearings 46 to 49 are equally angularly spaced around the helical axis H, but they could alternatively be spaced unequally.

As in the helical bearing arrangement of Fig. 5, (a) the first and second helical bearings 46 and 47 are of the same type as the helical bearing 30 shown in Fig. 2 wherein the bearing surfaces 31 and 32 each comprise respective grooves 34 and 35, and (b) the third and fourth helical bearings 48 and 49 are of the same type as the helical bearing 30 shown in Fig. 3 wherein the first bearing surface 31 comprises a groove 36 in which a rolling bearing element 33 is seated and the second bearing surface 32 is planar. Fig. 6 illustrates the case that the first bearing surface 31 of the third and fourth helical bearings 48 and 49 is on the lens element 10, but it could alternatively be on the support structure 2. As in the helical bearing arrangement of Fig. 5, each of the four helical bearings 46 to 49 comprises a single rolling bearing element 33. The constraints imposed by four helical bearings 46 to 49 are sufficient to constrain the movement of the lens element 10 with respect to the support structure 2 in degrees of freedom other than the helical movement.

However, the helical bearing arrangement of Fig. 6 is modified compared to that of Fig. 5 to change the arrangement of the bearing surfaces 31 and 32 in the individual bearings 46 to 49, as follows. In the first helical bearing 46, the bearing surfaces 32 on the lens element 10 are above the bearing surfaces 31 on the support structure 2 as viewed along the helical axis H, whereas in the second helical bearing 47, the bearing surfaces 32 on the lens element 10 are below the bearing surfaces 31 on the support structure 2 as viewed along the helical axis H. Similarly, in the third helical bearing 48, the bearing surfaces 32 on the lens element 10 are above the bearing surfaces 31 on the support structure 2 as viewed along the helical axis H, whereas in the fourth helical bearing 49, the bearing surfaces 31 on the lens element 10 are below the bearing surfaces 32 on the support structure 2 as viewed along the helical axis H.

This may be understood on the following basis with reference to a constraint of the bearings in the vertical plane, parallel to the helical axis. The first and third helical bearings 46 and 48 constrain the lens element 10 from moving down, and the second and fourth helical bearings 47 and 49 constrain the lens element 10 from moving up, or rotating around an axis between first and third helical bearings 46 and 48.

The use of one or more SMA actuator wires 60 to rotate the lens element 10 will now be described.

The SMA actuation apparatus 1 includes at least one SMA actuator wire 60 for the purpose of rotating the lens element 10. The or each SMA actuator wire 60 is connected between the support structure 2 and the lens element 10, for example as shown in Figs. 7 and 8. The SMA actuator wire 60 is connected to the support structure 2 and lens element 10 by crimp portions 61 which crimp the SMA actuator wire 60 to provide both mechanical and electrical connection. In the case of Fig. 7, the SMA actuator wire 60 extends in a plane normal to the helical axis H. In the case of Fig. 8, the SMA actuator wire 60 extends at an acute angle Q to a plane normal the helical axis H. The SMA actuator wire 60 is offset from the helical axis. Thus, in both the case Fig. 7 and Fig. 8, contraction of the SMA actuator wire 60 drives rotation of the lens element 10 around the helical axis H. Accordingly, either of the orientations of the SMA actuator wire 60 of Fig. 7 or Fig. 8 may be used in any of the arrangements described below, unless otherwise stated.

As the helical bearing arrangement 20 guides helical movement of the lens element 10 with respect to the support structure 2 and constrains movement in other degrees of freedom, the rotation driven by contraction of the SMA actuator wire 60 is converted by the helical bearing arrangement 20 into helical movement of the lens element 10 with respect to the support structure 2. Thus, as well as the component of rotational movement, a component of translational movement of the lens element 10 with respect to the support structure 2 is achieved along the helical axis H. This changes the focus of the image on the image sensor 3 as described above.

As the SMA actuator wire 60 has the primary purpose of driving rotation of the lens element 10, the extent of the SMA actuator wire projected along the helical axis H may be minimised. As such, other components of the SMA actuation apparatus 1 constrain the reduction in size along the helical axis H. Typically, the height projected along the helical axis H becomes dependent on the helical bearing arrangement 20, for example, the geometry there of the helical bearing arrangement. The helical bearing arrangement 20 is illustrated schematically in Figs. 7 and 8.

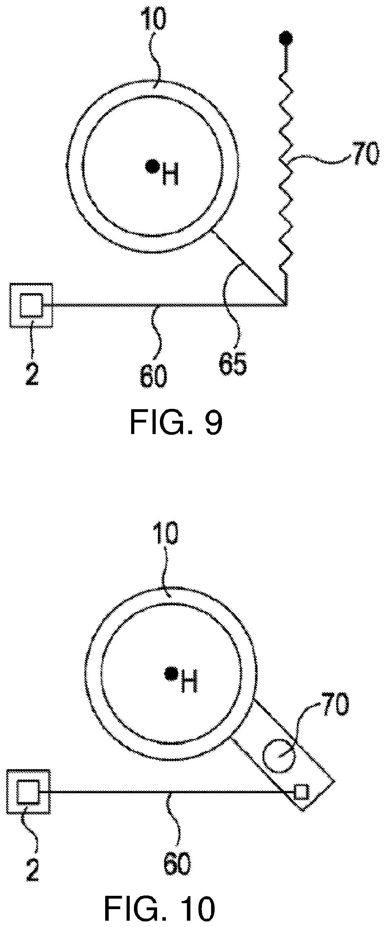

Various different arrangements of the at least one SMA actuator wire 60 may be used in the SMA actuation apparatus 1, provided that the at least one SMA actuator wire 60 drives rotation of the lens element 10 with respect to the support structure 2. Some examples of possible arrangements of the at least one SMA actuator wire 60 are as follows with reference to Figs. 9 and 10 which are each schematic drawings of the SMA actuation apparatus 1 including schematically illustrated connection portions 65 that are part of the lens element 10 and to which the SMA actuator wire 60 is connected. In each case, the or each SMA actuator wire 60 is connected between the support structure 2 and the lens element 10 in the respective orientations shown.

In a first type of embodiment, the SMA actuation apparatus 1 further comprises a resilient biasing element 70 connected between the support structure 2 and the lens element 10, as in Fig. 9. The resilient biasing element 70 is typically a spring, as in the examples below, but in principle could be formed by any other element for example being a flexure or a piece of resilient material.

Such a resilient biasing element 70 is arranged to resiliently bias the at least one SMA actuator wire 60. In general terms, use of a resilient biasing element 70 with an SMA actuator wire is known, the resilient biasing element 70 applying a stress to the SMA actuator wire 60 and driving movement in the opposite direction from contraction of the SMA actuator wire 60. Thus, such a resilient biasing element 70 may be employed with a single SMA actuator wire 60 or plural SMA actuator wires 60. In the specific case of the SMA actuation 1, the resilient biasing element 70 may be arranged in various ways, some examples of which are as follows.

Fig. 9 shows an example where the SMA actuation apparatus 1 comprises a single SMA actuator wire 60 only and the resilient biasing element 70 extends around the helical axis H and so provides a force around the helical axis H. In Fig. 159 the resilient biasing element operates in tension, but alternatively could operate in compression, for example being arranged alongside the SMA actuator wire 60. The use of a resilient biasing element 70 extends around the helical axis H minimises the extent of the resilient biasing element 70 projected along the helical axis H.

Fig. 10 shows an example where the SMA actuation apparatus 1 comprises a single SMA actuator wire 60 only and the resilient biasing element 70 extends parallel to the helical axis H and so provides a force along the helical axis H. In this case, the forces applied by the resilient biasing element 70 acts in a different direction from the SMA actuator wire 60, but resilient biasing is still provided due to the effect of the helical bearing arrangement 20. In Fig. 10, a helical spring is the resilient biasing element 70, shown with its axis parallel to the optic axis. The spring axis could alternatively be at an angle to the optic axis.

The examples shown in Figs. 9 and 10 include a single SMA actuator wire 60, but may be modified to include plural SMA actuator wires 60 acting in parallel. For example, the SMA actuator wire 60 and the resilient biasing element 70 may be duplicated on opposite sides of the lens element 10. The SMA actuator wires 60 and the resilient biasing elements 70 have rotational symmetry around the helical axis, and so the SMA actuator wires 60 are complimentary and drive rotation of the lens element 10 with respect to the support structure 2 in parallel, that is in the same sense around the helical axis H, and so are actuated together. However, as the SMA actuator wires 60 are arranged on opposite sides of the helical axis H, the SMA actuator wires 60 also provide translational forces on the lens element 10 in opposite directions in a plane normal to the helical axis H. Thus, the net translational force applied by the SMA actuator wires 60 is minimised, thereby reducing the force applied to the helical bearing arrangement 20.

In another configuration, no resilient biasing element is provided, and instead the SMA actuation apparatus 1 comprises at least one pair of SMA actuator wires 60 that are arranged to drive rotation of the lens element 10 in opposite senses around the helical axis H. Similar to known uses of opposed SMA actuator wires to provide opposed forces in translation of an object that moves linearly, the or each pair of SMA actuator wires 60 apply opposed torques around the helical axis H. Thus, the SMA actuator wires 60 of the pair apply a stress to each other, which may act through the helical bearing arrangement 20, and drive rotation of the lens element 10 in the opposite directions around the helical axis H.

In general terms, any of the forms of the helical bearing arrangement 20 described herein, including any helical bearing arrangement or the flexure arrangement, may be used with any of the arrangements of at least one SMA actuator wire 60 described herein.

In all of the examples above, the SMA actuator wires 60 are driven by the control circuit implemented in the IC (Integrated Circuit) chip 5. In particular, the control circuit generates drive signals for each of the SMA actuator wires 60 and supplies the drive signals to the SMA actuator wires 60. The control circuit receives an input signal representing a desired position for the lens element 10 along the optical axis O and generates drive signals selected to drive the lens element 10 to the desired position. The drive signals may be generated using a resistance feedback control technique, in which case the control circuit 20 measures the resistance of the lengths of SMA actuator wire 20 and uses the measured resistance as a feedback signal to control the power of the drive signals. Such a resistance feedback control technique may be implemented as disclosed in any of WO- 2013/175197; WO-2014/076463; WO-2012/066285; WO-2012/020212; WO-2011/104518; WO-2012/038703; WO-2010/089529 or WO-2010029316. As an alternative, the control circuit may include a sensor which senses the position of the lens element 10, for example a Hall sensor which sense the position of a magnet fixed to the lens element 10. In this case, the drive signals use the sensed position as a feedback signal to control the power of the drive signals.

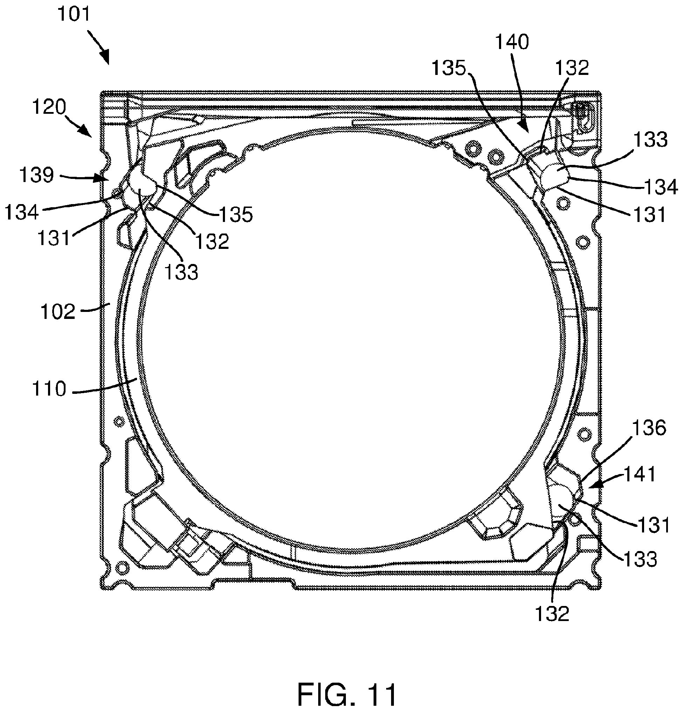

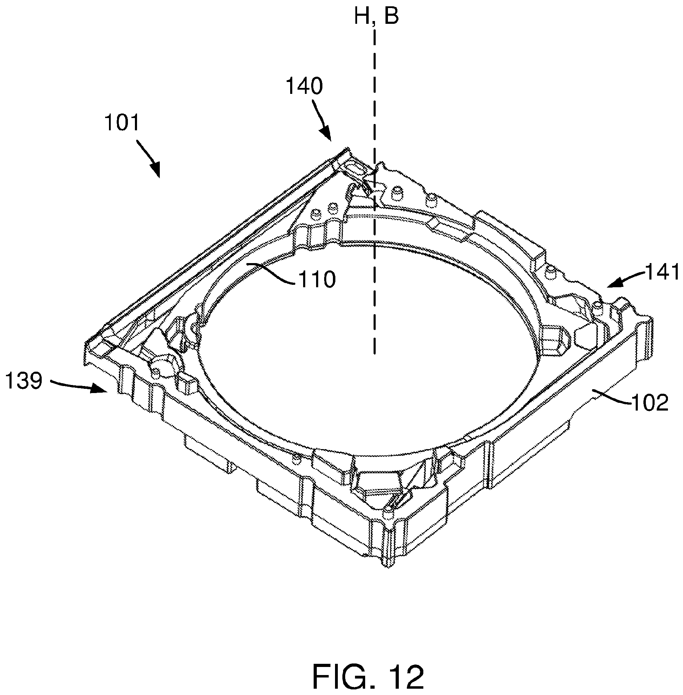

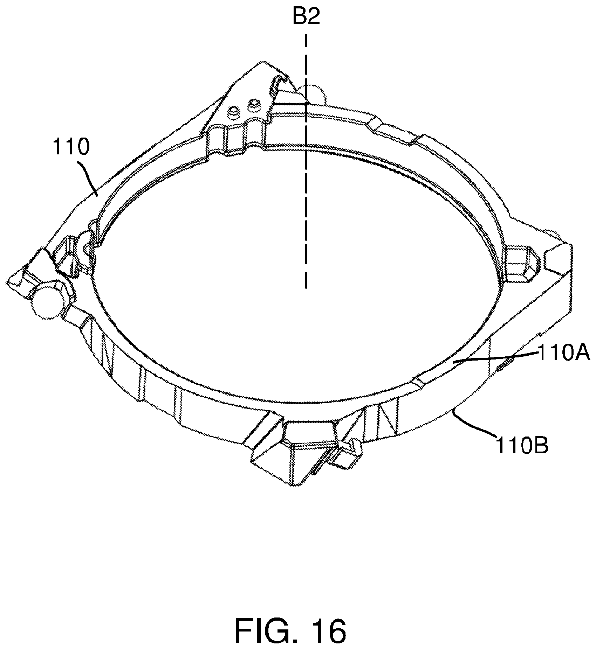

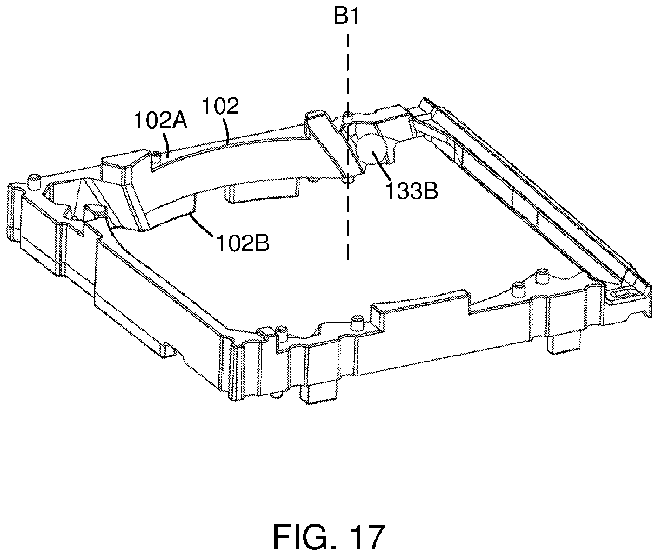

Referring now to Figs. 11 to 25, a first embodiment of an actuator assembly 101 is shown.

The actuator assembly 101 comprises a first part 102 and a second part 110. In the present embodiment, the first part 102 is a support structure 102 and the second part 110 is a moveable element 110 or movable part 110, for example, a lens element 110. However, it should be recognised that the first and second parts 102, 110 may be other components. In one alternative embodiment (not shown), the first part is a moveable element and the second part is a support structure.

The actuator assembly 101 further comprises a helical bearing arrangement 120. The helical bearing arrangement 120 is arranged to guide helical movement of the second part 110 with respect to the first part 102 around a helical axis H such that rotation of the second part 110 around the helical axis H is converted into helical movement of the second part 110.

The actuator assembly 101 further comprises a drive mechanism (not shown) that is configured to drive rotation of the second part 110 relative to the first part 102 around the helical axis H which the helical bearing arrangement 120 converts into the helical movement of the second part 110.

The drive mechanism may comprise an SMA actuator having the configuration of any of the examples described above in reference to Figs. 1 to 10, or may comprise an SMA actuator with an alternate configuration. In yet further embodiments, the drive mechanism may be of a type other than an SMA actuator. For example, the drive mechanism may instead, or additionally, comprise an electric motor (not shown) that is configured to drive rotation of the second part 110 relative to the first part 102.

In the present example, the drive mechanism is an SMA actuator of the type shown in Fig. 9, comprising a single SMA actuator wire 60 and a resilient biasing element 70 for providing resilient biasing, with the resilient biasing element 70 extending around the helical axis H to provide a force around the helical axis H. In some embodiments, an electrical connection element (not shown) is mounted on the second part 110 to provide an electrical connection from the end of the SMA actuator wire 60 which is connected to the second part 110 to the first part 102. A detailed description of the operation of the SMA actuator will not be repeated hereinafter.

In the present example, the helical bearing arrangement 120 has a similar arrangement to the helical bearing arrangement 20 shown in Fig. 4, comprising first, second and third helical bearings 139, 140, 141. However, it should be recognised that the helical bearing arrangement 120 may instead have the configuration shown in Fig. 5 or Fig. 6, for example, comprising four helical bearings, or an alternate configuration.

The first helical bearing 139 is spaced from the second helical bearing 140 in a first direction about the helical axis H and the third helical bearing 141 is spaced from the second helical bearing 141 in a second direction about the helical axis H. The first and third helical bearings 139, 141 may be equally spaced from the second helical bearing 140. The first, second and third helical bearings 139, 140, 141 may overlap in a direction along the helical axis H.

The first and second helical bearings 139 and 140 are of the same type as the helical bearing 30 shown in Fig. 2. Each of the first and second helical bearings 139, 140 comprises first and second bearing regions 131 and 132. The first part 102 comprises the first bearing regions 131 and the second part 110 comprises the second bearing regions 132.

In the present example, the first bearing region 131 is a first bearing surface 131 and the second bearing region 132 is a second bearing surface 132. Each first bearing surface 131 comprises a groove 134 and each second bearing surface 132 comprises a groove 135.

The third helical bearing 141 is of the same type as the helical bearing 30 shown in Fig. 3. The third helical bearing 141 comprises a first bearing region 131. In the present example, the first bearing region 131 is a first bearing surface 131 comprising a groove 136 in which a rolling bearing element 133 is seated.

The third helical bearing 141 further comprises a second bearing region 132. In the present example, the second bearing region 132 is a second bearing surface 132 that is planar or generally planar. The first bearing region 131 of the third helical bearing 141 is on the first part 102 and the second bearing region 132 is on the second part 110.

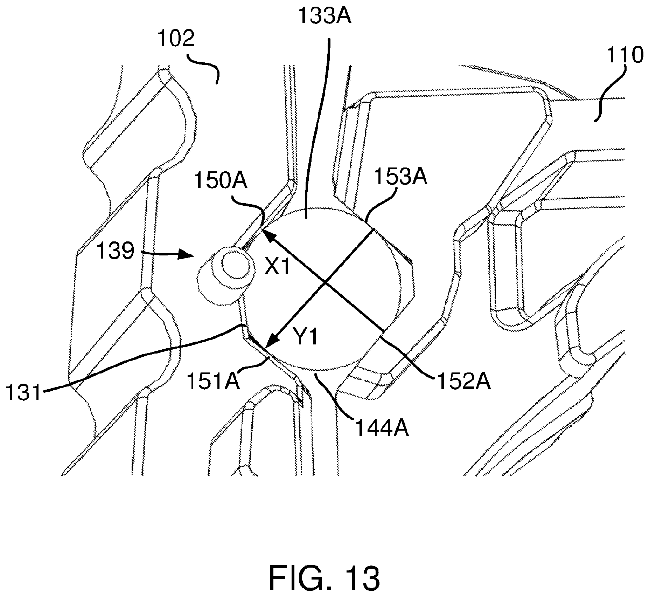

The first bearing surface 131 of the first helical bearing 139 comprises first and second bearing faces 150A, 151A (shown in Fig. 13). The first and second bearing faces 150A, 151A are at substantially right angles to each other.

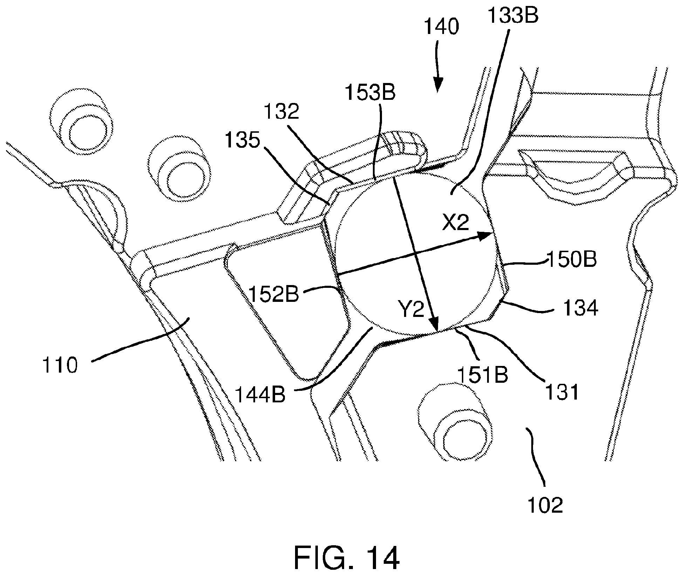

The second bearing surface 132 of the first helical bearing 139 comprises first and second bearing faces 152A, 153A (shown in Fig. 14). The first and second bearing faces 152A, 153A are at substantially right angles to each other.

The first bearing face 150A of the first bearing surface 131 of the first helical bearing 139 faces towards the first bearing face 152A of the second bearing surface 132, wherein a single rolling bearing element 133A is received between the first bearing faces 150A, 152A to engage the first bearing faces 150A, 152A simultaneously. The first bearing faces 150A, 152A are substantially parallel to each other. The engagement of the first bearing faces 150A, 152A with the rolling bearing element 133A constrains movement of the second part 110 relative to the first part 102 in a first direction (shown by arrow 'X1' in Fig. 13). The first direction X1 extends perpendicular to the direction of helical movement of the second part 110 relative to the first part 102, and is generally normal to the first bearing faces 150A, 152A.

The second bearing face 151A of the first bearing surface 131 of the first helical bearing 139 faces towards the second bearing face 153A of the second bearing surface 132, wherein the rolling bearing element 133A is received between the second bearing faces 151A, 153A to engage the second bearing faces 151A, 153A simultaneously. The second bearing faces 151A, 153A are substantially parallel to each other. The engagement of the second bearing faces 151A, 153A with the rolling bearing element 133A constrains movement of the second part 110 relative to the first part 102 in a second direction (shown by arrow 'Y1' in Fig. 13). The first direction Y1 extends perpendicular to the direction of helical movement of the second part 110 relative to the first part 102, and is generally normal to the second bearing faces 151A, 153A.

The first bearing surface 131 of the second helical bearing 140 comprises first and second bearing faces 150B, 151B. The first and second bearing faces 150B, 151B are at substantially right angles to each other. The second bearing surface 132 of the second helical bearing 140 comprises first and second bearing faces 152B, 153B. The first and second bearing faces 152B, 153B are at substantially right angles to each other.

The first bearing face 150B of the first bearing surface 131 of the second helical bearing 140 faces towards the first bearing face 152B of the second bearing surface 132, wherein a single rolling bearing element 133B is received between the first bearing faces 150B, 152B to engage the first bearing faces 150B, 152B simultaneously. The first bearing faces 150B, 152B are substantially parallel to each other. The engagement of the first bearing faces 150B, 152B with the rolling bearing element 133B constrains movement of the second part 110 relative to the first part 102 in a third direction (shown by arrow 'X2' in Fig. 14). The third direction X2 extends perpendicular to the direction of helical movement of the second part 110 relative to the first part 102, and is generally normal to the first bearing faces 150B, 152B.

The second bearing face 151B of the first bearing surface 131 of the second helical bearing 140 faces towards the second bearing face 153B of the second bearing surface 132, wherein the rolling bearing element 133B is received between the second bearing faces 151B, 153B to engage the second bearing faces 151B, 153B simultaneously. The second bearing faces 151B, 153B are substantially parallel to each other. The engagement of the second bearing faces 151B, 153B with the rolling bearing element 133B constrains movement of the second part 110 relative to the first part 102 in a fourth direction (shown by arrow 'Y2' in Fig. 14). The fourth direction Y2 extends perpendicular to the direction of helical movement of the second part 110 relative to the first part 102, and is generally normal to the second bearing faces 151B, 153B.

The first bearing surface 131 of the third helical bearing 141 comprises first and second bearing faces 150C, 151C. The first and second bearing faces 150C, 151C are at substantially right angles to each other.

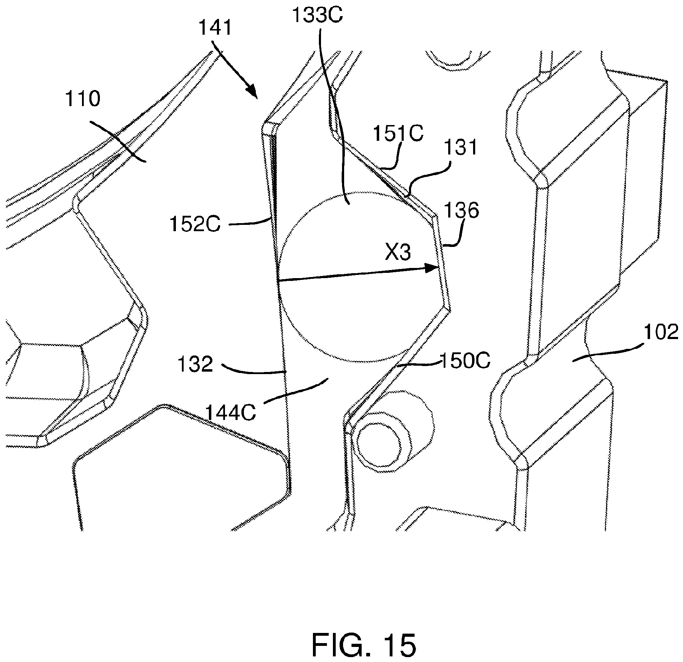

The second bearing surface 132 of the third helical bearing 141 is generally planar and forms a first bearing face 152C (shown in Fig. 15).

The first and second bearing faces 150C, 151C of the first bearing surface 131 face towards the first bearing face 152C of the second bearing surface 132 at an angle to the second bearing surface 132. A single rolling bearing element 133C is received between the first and second bearing faces 150C, 151C of the first bearing surface 131 and the first bearing face 152C of the second bearing surface 132 to engage the faces 150C, 151C, 152C simultaneously.

The engagement of the first and second bearing faces 150C, 151C of the first bearing surface 131 and the first bearing face 152C of the second bearing surface 132 with the rolling bearing element 133C constrains movement of the second part 110 relative to the first part 102 in a fifth direction (shown by arrow 'X3' in Fig. 15). The fifth direction X3 extends normal to the first bearing face 152C of the second bearing surface 132, in a direction away from said first bearing face 152C. The fifth direction X3 extends at approximately 45 degrees to the first and second bearing faces 150C, 151C of the first bearing surface 131, towards the centre of the groove 136 of the first bearing surface 131.

A first track 144A is disposed between the first and second bearing faces 150A, 151A, 152A, 153A of the first and second bearing surfaces 131, 132 of the first helical bearing 139. The rolling bearing element 133A of the first helical bearing 139 is received in the first track 144A.

A second track 144B is disposed between the first and second bearing faces 150B, 151B, 152B, 153B of the first and second bearing surfaces 131, 132 of the second helical bearing 140. The rolling bearing element 133B of the second helical bearing 140 is received in the second track 144B.

A third track 144C is disposed between the first and second bearing faces 150C, 151C of the first bearing surface 131 and the first bearing face 152C of the second bearing surface 132 of the third helical bearing 141. The rolling bearing element 133C of the third helical bearing 141 is received in the third track 144C.

In some embodiments, the first, second, third, fourth and fifth directions X1, Y1, X2, Y2, X3 all extend substantially perpendicular to the helical path of the helical motion of the second part 110 relative to the first part 102.

The first helical bearing 139 by itself does not constrain rotational movement of the second part 110 relative to the first part 102 and, in particular, does not constrain rotational movement of the second part 110 relative to the first part 102 about an axis perpendicular to the helical path of the second part 110 (i.e. the direction of movement shown by arrow M in Fig. 3). In the present example, the first helical bearing 139 by itself does not constrain rotational movement of the second part 110 relative to the first part 102 about the rolling bearing element 133A of the first helical bearing 139. That is, the bearing faces 150A, 151A, 152A, 153A abut the rolling bearing element 133A to constrain translational movement of the second part 110 relative to the first part 102 in the first and second directions X1, Y1, but still permit rotation of the second part 110 relative to the first part 102 about the rolling bearing element 133A.

The second helical bearing 140 by itself does not constrain rotational movement of the second part 110 relative to the first part 102 and, in particular, does not constrain rotational movement of the second part 110 relative to the first part 102 about an axis perpendicular to the helical path of the second part 110 (i.e. the direction of movement shown by arrow M in Fig. 3). In the present example, the second helical bearing 140 by itself does not constrain rotational movement of the second part 110 relative to the first part 102 about the rolling bearing element 133B of the second helical bearing 140. That is, the bearing faces 150B, 151B, 152B, 153B abut the rolling bearing element 133B to constrain translational movement of the second part 110 relative to the first part 102 in the third and fourth directions X2, Y2, but still permit rotation of the second part 110 relative to the first part 102 about the rolling bearing element 133B.

The third helical bearing 141 by itself does not constrain rotational movement of the second part 110 relative to the first part 102 and, in particular, does not constrain rotational movement of the second part 110 relative to the first part 102 about an axis perpendicular to the helical path of the second part 110 (i.e. the direction of movement shown by arrow M in Fig. 3). In the present example, the third helical bearing 141 by itself does not constrain rotational movement of the second part 110 relative to the first part 102 about the rolling bearing element 133C of the third helical bearing 141. That is, the bearing faces 150C, 151C, 152C abut the rolling bearing element 133C to constrain translational movement of the second part 110 relative to the first part 102 in the fifth direction X3, but still permit rotation of the second part 110 relative to the first part 102 about the rolling bearing element 133C.

In the present example, each of the helical bearings 139, 140, 151 itself permits rotation of the second part 110 relative to the first part 102 because only a single rolling bearing element 133A, 133B, 133C is provided in each of the first, second and third tracks 144A, 144B, 144C. More specifically, a single bearing element 133A in the first track 144A abuts the first bearing faces 150A, 152A simultaneously to constrain the second part 110 relative to the first part 102 in the first direction X1; a single bearing element 133B in the second track 144A abuts the first and second bearing faces 150B, 151B, 152B, 153B simultaneously to constrain the second part relative 110 relative to the first part 102 in the third and fourth directions X2, Y2; and, a single bearing element 133C in the third tack 144C abuts the first and second bearing faces 150C, 151C, 152C to constrain the second part 110 relative to the first part 102 in the fifth direction X3. However, it should be recognised that plural bearing elements may be provided in one or more of the tracks 144A, 144B, 144C, as is described below in reference to additional embodiments. Furthermore, in some embodiments a second bearing element may be provided that is smaller than the width of the track 144A, 144B, 144C and thus serves to position the constraining bearing element 133A, 133B, 133C rather than itself performing a constraining function, as will be described in more detail below.

Each of the first, second and third helical bearings 139, 140, 151 itself permits rotation of the second part 110 relative to the first part 102. However, together the first, second and third helical bearings 139, 140, 141 (and additional helical bearings in embodiments that comprise more than three helical bearings) restrict rotational movement of the second part 110 relative to the first part 102 such that only helical motion of the second part 110 relative to the first part 102 is permitted.

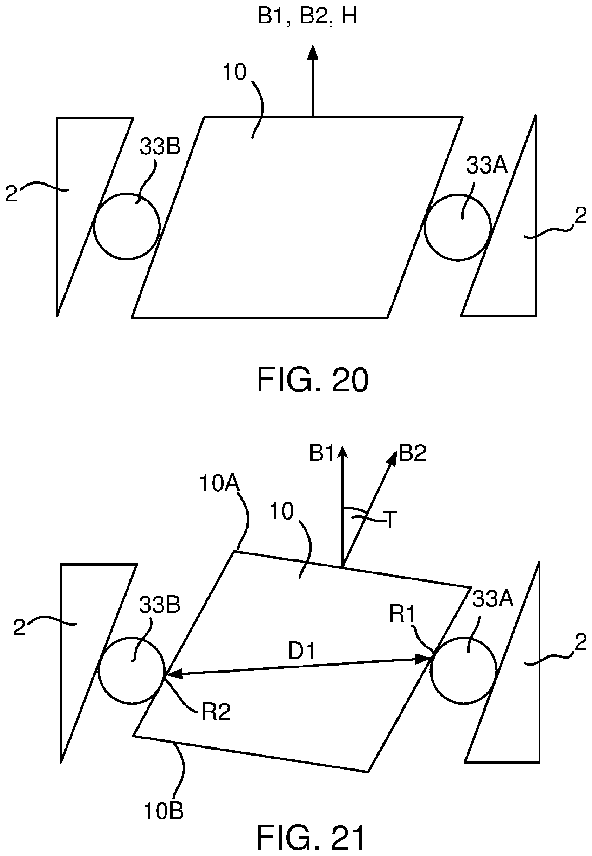

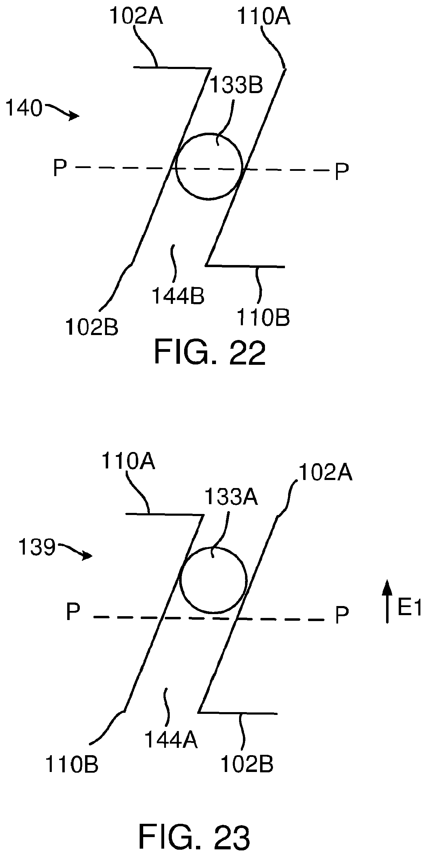

The first, second and third helical bearings 139, 140, 141 permitting rotation of the second part 110 relative to the first part 102, each about at least one respective rotational axis, makes it easier to manufacture the actuator assembly 101. This is because said rotation means that if the first part 102 or second part 110 is undersized or oversized, for example, due to manufacturing tolerances, then the second part 110 will be able to tilt relative to the first part 102 such that the second bearing regions 132 of the second part 110 still each abut a respective bearing element 133A, 133B, 133C. That is, the second part 110 is still helically coupled to the first part 102 by the helical bearing arrangement 120 despite the second part 110 being undersized. This principle is illustrated in Figs. 21 and 22.

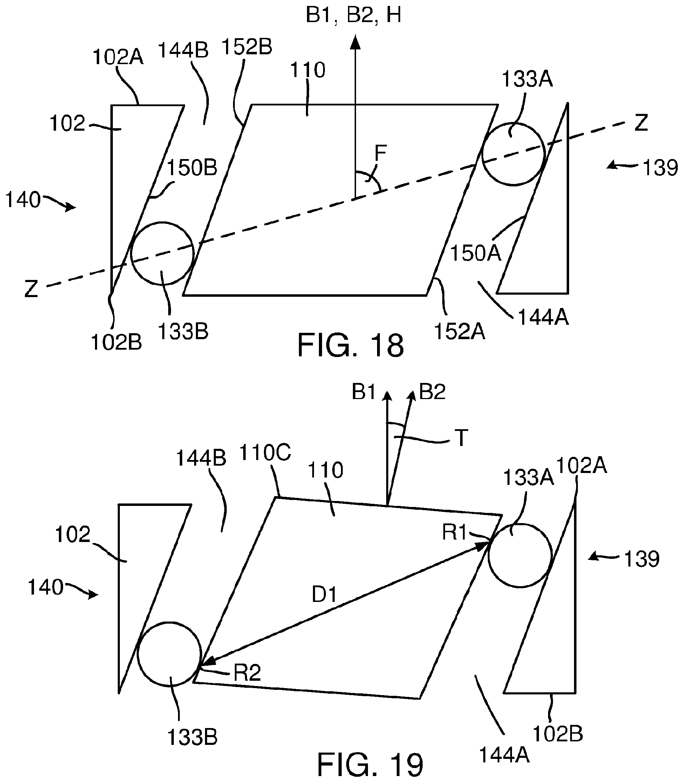

Figs. 18 and 19 are schematic cross-sectional views showing the first and second helical bearings 139, 140.

In Fig. 18, the first and second parts 102, 110 are each manufactured to their intended sizes, with no discrepancies in the sizes of the first and second parts 102, 110 introduced as a result of manufacturing tolerances. The first and second parts 102, 110 are ideally aligned such that the central axis B1 of the first part 102 is coincident with the central axis B2 of the second part 102. In the present example, the central axis B1 of the first part 102 is coincident with the helical axis H.

In Fig. 19, the second part 110 is slightly smaller than an intended ideal size due to manufacturing tolerances. In particular, the second part 110 is too small in a dimension extending between the rolling bearing elements 133A, 133B of the first and second helical bearings 139, 140. However, since the first helical bearing 139, itself permits rotation of the second part 110 relative to the first part 102, the second helical bearing 140 itself permits rotation of the second part 110 relative to the first part 102 and the third helical bearing 141 itself permits rotation of the second part 110 relative to the first part 102, the second part 110 is able to tilt relative to the first part 102. That is, the central axis B2 of the second part 110 is tilted relative to the central axis B1 of the first part 102 by a tilt angle T. Therefore, despite being undersized, the second part 110 is still able to fit between the bearing elements 133A, 133B, 133C such that the second part 110 is helically coupled to the first part 102 by the first, second and third helical bearings 139, 140, 141. This is advantageous because it means that the first and second parts 102, 110 do not need to be manufactured to exact sizes.

The rolling bearing elements 133A, 133B, 133C of the first, second and third helical bearings 139, 140, 141 are offset in order to reduce the amount of tilt of the second part 110 relative to the first part 102. That is, the tilt angle T is reduced.

The rolling bearing element 133A of the first helical bearing 139 is offset from the rolling bearing element 133B of the second helical bearing 140 in a direction (shown by arrow 'E1' in Fig. 23) along the helical axis H towards a first side 102A of the first part 102 which, in the present example, is a top side 102A of the first part 102.

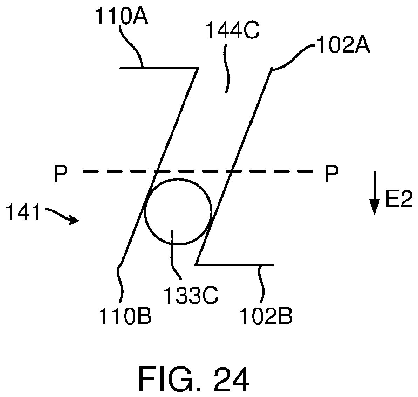

The rolling bearing element 133C of the third helical bearing 141 is offset from the rolling bearing element 133B of the second helical bearing 140 in a direction (shown by arrow 'E2' in Fig. 24) along the helical axis H towards a second side 102B of the first part 102 which, in the present example, is a bottom side 102B of the first part 102.

The first and second sides 102A, 102B of the first part 102 may be opposite sides of the first part 102.

The rolling bearing element 133A of the first helical bearing 139 is above, or at least partially above, the rolling bearing element 133B of the second helical bearing 140 when viewed along the helical axis H and the rolling bearing element 133C of the third helical bearing 141 is below, or at least partially below, the rolling bearing element 133B of the second helical bearing 140.
The offset of the rolling bearing elements 133A, 33B, 133C is shown schematically in Figs. 22 to 24.

Fig. 22 is a schematic cross-sectional view showing the position of the rolling bearing element 133B of the second helical bearing 140 within the second track 144B. The centre of the rolling bearing element 133B is aligned with a plane (shown by dashed line 'P-P' in Figs. 22 to 24) that extends normal to the helical axis H.

Fig. 23 is a schematic cross-sectional view showing the position of the rolling bearing element 133A of the first helical bearing 139 within the first track 144A. The rolling bearing element 133A is offset from the plane P-P along the first track 144A in a direction towards the first side 102A of the first part 102. That is, the centre of the rolling bearing element 133A is spaced from the plane P-P.

Fig. 24 is a schematic cross-sectional view showing the position of the rolling bearing element 133C of the third helical bearing 141 within the third track 144C. The rolling bearing element 133C is offset from the plane P-P along the third track 144C in a direction towards the second side 102B of the first part 102. That is, the centre of the rolling bearing element 133C is spaced from the plane P-P.

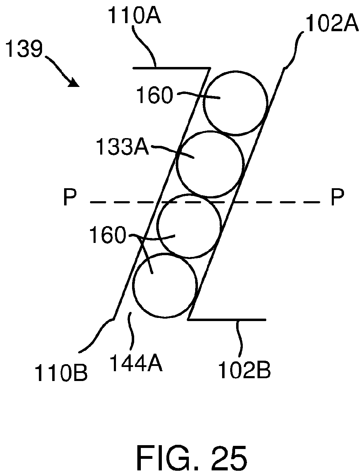

In some embodiments, the rolling bearing elements 133A, 133B, 133C are held in their respective positions within the first, second and third tracks 144A, 144B, 144C by positioning elements 160 (shown schematically in Fig. 25, but omitted from the remaining drawings for clarity) that are located within the tracks 144A, 144B, 144C. In some embodiments, the positioning elements 160 comprise bearing elements 160, for example, ball bearings, that are located in one or more of the tracks 144A, 144B, 144C but are of a smaller diameter than the rolling bearing elements 133A, 133B, 133C and therefore do not simultaneously contact the first and second bearing faces 150A, 150B, 150C, 151A, 151B, 151C, 152A, 152B, 152C, 153A, 153B, 153C of the respective track 144A, 144B, 14C and thus do not constrain the second part 110 relative to the first part 102 in the first, second, third, fourth or fifth directions X1, Y1, X2, Y2, X3. In some embodiments, multiple positioning elements may be provided in each track 114A, 144B, 144C, for example, on opposite sides of the respective rolling bearing element 133A, 133B, 133C.

Each helical bearing 139, 140, 141 may comprise a stop (not shown) at each end of the track 144A, 144B, 144C that prevents the positioning element(s) 160 and or the respective rolling bearing element 133A, 133B, 133C from falling out of the ends of the track 144A, 144B, 144C. Each stop may comprise, for example, a plate that covers or partially covers an end of one or more of the tracks 144A, 144B, 144C.

Fig. 25 schematically illustrates positioning elements 160 within the first track 144A of the first helical bearing 139. The positioning elements 160 are each roller bearings 160 that have a diameter that is smaller than the diameter of the rolling bearing element 133A of the first helical bearing 139. Thus, a gap is formed between each positioning element 160 and at least one bearing face.

In an alternative embodiment, the positioning elements comprises stop elements (not shown) that are fixed within the track 144A, 144B, 144C to limit movement of the rolling bearing element 133A, 133B, 133C within the track 144A, 144B, 144C. The stop elements (not shown) may be fixed to the first and/or second bearing surfaces 131, 132 of each helical bearing 139, 140, 141.

In some embodiments, the first and second parts 102, 110 move relative to the bearing elements 133A, 133B, 133C during helical movement of the second part 110 relative to the first part 102 such that the bearing elements 133A, 133B, 133C move within the respective tracks 144A, 144B, 144C. In some embodiments, movement of the bearing elements 133A, 133B, 133C within the respective tracks 144A, 144B, 144C is significantly smaller than the length of the respective tracks 144A, 144B, 144C, that is, the distance between distal ends of the respective tracks 144A, 144B, 144C.

In some embodiments, the positioning elements permit movement within the tracks 144A, 144B, 144C. For instance, the positioning elements do not completely constrain movement of the bearing elements 133A, 133B, 133C but instead limit the bearing elements 133A, 133B, 133C to a region within the track 144A, 144B, 144C. For instance, the or each positioning element in the first track 144A, may limit the bearing element 133A to a region towards the top of the first track 144A; the or each positioning element in the second track 144B may limit the bearing element 133B to a region towards the middle of the second track 144B; and, the or each positioning element in the third track 144C, may limit the bearing element 133C to a region towards the bottom of the third track 144C.

The rolling bearing elements 133A, 133C of the first and third helical bearings 139, 141 being offset from the rolling bearing element 133B of the second helical bearing 140 reduces the tilt angle T between the first and second parts 102, 110 for a given manufacturing tolerance. For example, if the second part 110 is undersized or oversized by a given amount, then offsetting the rolling bearing elements 133A, 133C of the first and third helical bearing 139, 141 from the rolling bearing element 133B of the second helical bearing 140 reduces the tilt angle T between the central axis B1 of the first part 102 and the central axis B2 of the second part 110, which will also mean that the helical axis H is more closely aligned with the central axis B1 of the first part 102.

Reducing the tilt angle T is advantageous because it reduces the amount that a portion 110C of the tilted second part 110 protrudes out of the first part 102 (see Fig. 19), allowing for the actuator assembly 101 to be more compact. Furthermore, reducing the tilt angle T is advantageous because it will improve alignment of components mounted to the second part 110 with components amounted to the first part 102. For instance, if a lens element (not shown) is mounted to the second part 110 and an image sensor is mounted to the first part 102, then reducing the tilt angle T will make the lens element closer to parallel to the image sensor and thus improves optical properties of the optical device.

The rolling bearing elements 133A, 133B of the first and second helical bearings 139, 140 being offset reduces the tilt angle T because the distance between the rolling bearing elements 133A, 133B is increased. The rolling bearing element 133A of the first helical bearing 139 contacts the first bearing face 152A of the second surface 132 of the first helical bearing 139 at a contact region R1. The rolling bearing element 133B of the second helical bearing 140 contacts the first bearing face 152B of the second surface 132 of the second helical bearing 140 at a contact region R2. Offsetting the rolling bearing elements 133A, 133B causes the distance (shown by arrow 'D1' in Fig. 19) between the contact regions R1, R2 to be increased, which means that the second part 110 is rotated relative to the first part 102 such that the contact regions R1, R2 are located closer to the top and bottom sides 110A, 110B of the second part 110 and thus tilt of the second part 110 is reduced.

This is in contrast to the arrangement illustrated in Figs. 20 and 21, shown for information purposes. Figs. 20 and 21 show an actuator assembly wherein the rolling bearing elements 33A, 33B are not offset. Instead, the rolling bearing elements 33A, 33B are aligned in a direction along the central axis B1 of the first part 2. If the first and second parts 2, 10 are manufactured to ideal sizes, then the first and second parts 2, 10 are aligned such that the central axis B1 of the first part 2 is coincident with the central axis B2 of the second part 10. However, if the first or second parts 2, 10 are larger or smaller than their ideal sizes due to manufacturing tolerances, then the second part 2 will be tilted relative to the first part 10. More specifically, the central axis B2 of the second part 10 will be at a tilt angle T relative to the central axis B1 of the first part 2, as shown in Fig. 21. The tilt angle T of the arrangement of Fig. 21 is larger than the tilt angle T of the arrangement of Fig. 19, for a given manufacturing tolerance.

The rolling bearing elements 133B, 133C of the second and third helical bearings 140, 141 being offset reduces the tilt angle T because the distance between the rolling bearing elements 133B, 133C is increased. The rolling bearing element 133B of the second helical bearing 140 contacts the second bearing face 153B of the second surface 132 of the second helical bearing 140 at a contact region. The rolling bearing element 133C of the third helical bearing 141 contacts the bearing face 152C of the second surface 132 of the third helical bearing 141 at a contact region. Offsetting the rolling bearing elements 133B, 133C causes the distance between said contact regions to be increased, which means that the second part 110 is rotated relative to the first part 102 such that the contact regions are located closer to the top and bottom sides 110A, 110B of the second part 110 and thus tilt of the second part 110 is reduced, in a similar manner to offsetting the rolling bearing elements 133A, 133B of the first and second helical bearings 139, 140 as described above in reference to Fig. 19.

Offsetting the rolling bearing elements 133A, 133B of the first and second helical bearings 139, 140 reduces tilt of the second part 110 relative to the first part 102 if, for example, the second part 102 is oversized or undersized in a direction extending between the rolling bearing elements 133A, 133B of the first and second helical bearings 139, 140. Offsetting the rolling bearing elements 133B, 133B of the second and third helical bearings 140, 141 reduces tilt of the second part 110 relative to the first part 102 if, for example, the second part 102 is oversized or undersized in a direction extending between the rolling bearing elements 133BA, 133C of the second and third helical bearings 140, 141. However, it should be recognised that in some embodiments (not shown), only the bearing elements 133A, 133B of the first and second helical bearings 139, 140 are offset and the bearing element 133C of the third helical bearing 141 is aligned with the bearing element 133A, 133B of the first or second helical bearing 139, 140. In yet another embodiment (not shown), only the bearing elements 133B, 133C of the second and third helical bearings 140, 141 are offset and the bearing element 133A of the first helical bearing 139 is aligned with the bearing element 133B, 133C of the second or third helical bearing 140, 141. In yet another embodiment (not shown), the third helical bearing 141 is omitted entirely.

In one embodiment (not shown), only the rolling bearing element 133A, 133C of one of the first and third helical bearings 139, 141 is offset from the rolling bearing element 133B of the second helical bearing 140. In another embodiment (not shown), the rolling bearing elements 133A, 133C of the first and third helical bearings 139, 141 are both offset from the rolling bearing element 133B of the second helical bearing 140 but are not offset from each other.

An imaginary axis (depicted by dashed line 'Z-Z' in Fig. 18) extends through the centres of the rolling bearing elements 133A, 133B of the first and second helical bearings 139, 140. The axis Z-Z is at an angle F relative to the central axis B1 of the first part 102 of less than 90 degrees and, preferably, less than 85 degrees, less than 80 degrees, less than 75 degrees or less than 70 degrees. In some embodiments, the angle F is in the range of 90 to 65 degrees, or 85 to 70 degrees. The axis Z-Z is not perpendicular to the central axis B1 of the first part 102.

An imaginary axis (not shown) extends through the centres of the rolling bearing elements 133B, 133C of the second and third helical bearings 140, 141. The axis is at an angle (not shown) relative to the central axis B1 of the first part 102 of less than 90 degrees and, preferably, less than 85 degrees, less than 80 degrees, less than 75 degrees or less than 70 degrees. In some embodiments, the angle is in the range of 90 to 65 degrees, or 85 to 70 degrees. The axis is not perpendicular to the central axis B1 of the first part 102.

Referring now to Figs. 26 to 31, components of an actuator assembly according to a first example are shown. The actuator assembly of Figs. 26 to 31 is similar to that of the first embodiment of Figs. 11 to 25 and thus a detailed description will not be repeated hereinafter.

As with the first embodiment, the actuator assembly of the first example comprises first and second parts 202, 210 that are coupled together by a helical bearing arrangement.

The first part 202 comprises first and second sides 202A, 202B that in the present example are top and bottom sides 202A, 202B. The first and second sides 202A, 202B of the first part 202 may be opposite sides of the first part 202. The second part 210 comprises first and second sides 210A, 210B that in the present example are top and bottom sides 210A, 210B. The first and second sides 210A, 210B of the second part 210 may be opposite sides of the second part 210.

The helical bearing arrangement comprises first and third helical bearings (not shown) that are of the same configuration as the first and third helical bearings 139, 141 of the first embodiment.

The helical bearing arrangement further comprises a second helical bearing 240. A difference between the first embodiment and the first example of the actuator assembly is that the actuator assembly of the first example has a different arrangement of second helical bearing 240.

The second helical bearing 240 comprises first and second rolling bearing elements 233A, 233B that are received within a second track 244.

The first helical bearing is spaced from the second helical bearing 240 in a first direction about the helical axis H and the third helical bearing is spaced from the second helical bearing 240 in a second direction about the helical axis H. The first and third helical bearings may be equally spaced from the second helical bearing 240.

The second helical bearing 240 comprises first and second bearing regions 231 and 232. The first bearing region 231 is provided on the first part 202 and the second bearing region 232 is provided on the second part 210.

The first bearing region 231 of the second helical bearing 240 comprises first and second bearing faces 250A, 251A. The first and second bearing faces 250A, 251A are at substantially right angles to each other.

The second bearing region 132 of the second helical bearing 240 comprises first and second bearing faces 252A, 253A. The first and second bearing faces 252A, 253A are at substantially right angles to each other.

The second track 244 is disposed between the first and second bearing faces 250A, 251A, 252A, 253A of the first and second bearing regions 231, 232 of the second helical bearing 240. The first and second rolling bearing elements 233A, 233B of the second helical bearing 240 are received in the second track 244.

The first bearing face 250A of the first bearing region 231 faces towards the first bearing face 252A of the second bearing region 232, wherein a first rolling bearing element 233A is received between the first bearing faces 250A, 252A to engage both of the first bearing faces 250A, 252A simultaneously. The first bearing faces 250A, 252A are substantially parallel to each other. The engagement of the first bearing faces 250A, 252A with the first rolling bearing element 233A constrains movement of the second part 210 relative to the first part 202 in a first direction (shown by arrow 'X1' in Fig. 30, which is a schematic cross-sectional view of the second track 244 along the plane shown by dashed line P1-P1 in Fig. 28). The first direction X1 extends perpendicular to the direction of helical movement of the second part 210 relative to the first part 202, and is generally normal to the first bearing faces 250A, 252A.

The second bearing face 251A of the first bearing region 231 faces towards the second bearing face 253A of the second bearing region 232, wherein the second rolling bearing element 233B is received between the second bearing faces 251A, 253A to engage both of the second bearing faces 251A, 253A simultaneously. The second bearing faces 251A, 253A are substantially parallel to each other. The engagement of the second bearing faces 251A, 253A with the second rolling bearing element 233B constrains movement of the second part 210 relative to the first part 202 in a second direction (shown by arrow 'Y1' in Fig. 31, which is a schematic cross-sectional view of the second track 244 along the plane shown by dashed line P2-P2 in Fig. 28). The second direction Y1 extends perpendicular to the direction of helical movement of the second part 210 relative to the first part 202, and is generally normal to the second bearing faces 251A, 253A.

The first faces 250A, 252A of the first and second bearing regions 231, 232 of the second helical bearing 240 only extend partially along the length of the second track 244. A first recess 270A is formed into the first bearing region 231 along the remaining length of the second tack 244 and a second recess 270B is formed into the second bearing region 232 along said remaining length of the second track 244 such that the width of the second track 244 increases. Therefore, the second rolling bearing element 233B in the second track 244 does not contact both of the first faces 250A, 252A simultaneously and is instead aligned with the recesses 270A, 270B. This means that only the first rolling bearing element 133A in the second track 244 contacts both of the first faces 250A, 252A simultaneously to constrain movement of the second part 210 relative to the first part 202 in the first direction X1.

The second faces 251A, 253A of the first and second bearing regions 231, 232 of the second helical bearing 240 only extend partially along the length of the second track 244. A third recess 270C is formed into the first bearing region 231 along the remaining length of the second tack 244 and a fourth recess 270D is formed into the second bearing region 232 along said remaining length of the second track 244 such that the width of the second track 244 increases. Therefore, the first rolling bearing element 233A in the second track 244 does not contact both of the second faces 251A, 253A simultaneously and is instead aligned with the recesses 270C, 270D. This means that only the second rolling bearing element 133B in the second track 244 contacts both of the second faces 251A, 253A simultaneously to constrain movement of the second part 210 relative to the first part 202 in the second direction Y1.

In the present example, the first faces 250A, 252A of the first and second regions 231, 232 extend from a first end of the track 244 towards the centre of the track 244. The first end of the track 244 is proximate to the top sides 202A, 210A of the first and second parts 202, 210. In the present example, the second faces 251A, 253A of the first and second regions 231, 232 extend from a second end of the track 244 towards the centre of the track 244. The second end of the track 244 is proximate to the bottom sides 202B, 210B of the first and second parts 202, 210.

The second helical bearing 240 by itself therefore does not constrain rotational movement of the second part 210 relative to the first part 202 and, in particular, does not constrain rotational movement of the second part 210 relative to the first part 202 about a rotational axis perpendicular to the helical path of the second part 210 (i.e. the direction of movement shown by arrow M in Fig. 3).

In the present example, the second helical bearing 240 by itself does not constrain rotational movement of the second part 210 relative to the first part 202 about either of the first and second rolling bearing elements 233A, 233B of the second helical bearing 240. This is because only the first rolling bearing element 233A in the second track 244 abuts the first bearing faces 250A, 252A simultaneously and only the second rolling bearing element 233B in the second track 244 abuts the second bearing faces 251A, 253A simultaneously. Therefore, the second helical bearing 240A itself does not prevent rotation of the second part 210 relative to the first part 202 about the first rolling bearing element 233A on a first rotational axis and the second helical bearing 240A itself does not prevent rotation of the second part 210 relative to the first part 202 about the second rolling bearing element 233B on a second rotational axis. That is, the first bearing faces 250A, 252A abut the first rolling bearing element 233A simultaneously to constrain translational movement of the second part 210 relative to the first part 202 in the first direction X1, but still permit rotation of the second part 210 relative to the first part 202 about the first rolling bearing element 233A. Moreover, the second bearing faces 251A, 253A abut the second rolling bearing element 233B simultaneously to constrain translational movement of the second part 210 relative to the first part 202 in the second direction Y1, but still permit rotation of the second part 210 relative to the first part 202 about the second rolling bearing element 233B.

As with the first embodiment, the first helical bearing (not shown) by itself does not constrain rotational movement of the second part 210 relative to the first part 102 and, in particular, does not constrain rotational movement of the second part 210 relative to the first part 202 about an axis perpendicular to the helical path of the second part 210 (i.e. the direction of movement shown by arrow M in Fig. 3). Similarly, the third helical bearing (not shown) by itself does not constrain rotational movement of the second part 210 relative to the first part 202 and, in particular, does not constrain rotational movement of the second part 210 relative to the first part 202 about an axis perpendicular to the helical path of the second part 210 (i.e. the direction of movement shown by arrow M in Fig. 3).

Each of the first, second and third helical bearings 240 itself permits rotation of the second part 210 relative to the first part 202. However, together the first, second and third helical bearings 240 (and additional helical bearings in embodiments that comprise more than three helical bearings) restrict rotational movement of the second part 210 relative to the first part 202 such that only helical motion of the second part 210 relative to the first part 202 is permitted.

The first, second and third helical bearings 240 permitting rotation of the second part 210 relative to the first part 202, each about at least one respective rotational axis, makes it easier to manufacture the actuator assembly. This is because said rotation means that if the first part 202 or second part 210 is undersized or oversized, for example, due to manufacturing tolerances, then the second part 210 is tilted relative to the first part 202 such that the respective second bearing regions 232 of the second part 210 still each abut a respective bearing element. That is, the second part 210 is still helically coupled to the first part 202 by the helical bearing arrangement despite the manufacturing tolerances, as explained above in respect of the first embodiment.

The single bearing element of the first helical bearing (not shown) is offset from the second bearing element 233B of the second helical bearing 240. The single bearing element of the third helical bearing (not shown) is offset from the first bearing element 233A of the second helical bearing 240. Therefore, the distance between the single bearing element of the first helical bearing (and the second bearing element 233B of the second helical bearing 240 is increased and the distance between the single bearing element of the third helical bearing and the first bearing element 233A of the second helical bearing 240 is increased. This decreases the tilt angle of the second part 210 relative to the first part 202 due to manufacturing tolerances, as explained above in reference to the first embodiment.

In the present example, the single bearing element of the first helical bearing is located towards the top of the first track and the second bearing element 233B of the second helical bearing is located towards the bottom of the second track 244. In the present example, the single bearing element of the third helical bearing is located towards the bottom of the third track and the first bearing element 233A of the second helical bearing is located towards the top of the second track 244.

Referring now to Figs. 32 to 37, components of an actuator assembly according to a second embodiment are shown. The actuator assembly of the second embodiment of Figs. 32 to 37 is similar to that of the first example of Figs. 26 to 31 and thus a detailed description will not be repeated hereinafter.

As with the first example of Figures 26 to 31, the actuator assembly of the second embodiment comprises first and second parts 302, 310 that are coupled together by a helical bearing arrangement. The first part 302 comprises first and second sides 302A, 302B that in the present example are top and bottom sides 302A, 302B. The second part 310 comprises first and second sides 310A, 310B that in the present example are top and bottom sides 310A, 310B.

The helical bearing arrangement comprises first and third helical bearings (not shown) that are of the same configuration as the first and third helical bearings 139, 141 of the first embodiment and first example.

The helical bearing arrangement further comprises a second helical bearing 340. A difference between the second and third embodiments of the actuator assembly is that the actuator assembly of the second embodiment has a different arrangement of second helical bearing 340.

The second helical bearing 340 comprises first and second rolling bearing elements 333A, 333B that are received within a second track 344.

The first helical bearing is spaced from the second helical bearing 340 in a first direction about the helical axis H and the third helical bearing is spaced from the second helical bearing 340 in a second direction about the helical axis H. The first and third helical bearings may be equally spaced from the second helical bearing 340.

The second helical bearing 340 comprises first and second bearing regions 331 and 332. The first bearing region 331 is provided on the first part 302 and the second bearing region 332 is provided on the second part 310.

The first bearing region 331 of the second helical bearing 340 comprises first and second bearing faces 350A, 351A. The first and second bearing faces 350A, 351A are at substantially right angles to each other.

The second bearing region 332 of the second helical bearing 340 comprises first and second bearing faces 352A, 353A. The first and second bearing faces 352A, 353A are at substantially right angles to each other.

The second track 344 is disposed between the first and second bearing faces 350A, 351A, 352A, 353A of the first and second bearing regions 331, 332 of the second helical bearing 340. The first and second rolling bearing elements 333A, 333B of the second helical bearing 340 are received in the second track 344.

The first bearing face 350A of the first bearing region 331 faces towards the first bearing face 352A of the second bearing region 332, wherein a first rolling bearing element 333A is received between the first bearing faces 350A, 352A to engage both of the first bearing faces 350A, 352A simultaneously. At least a portion of the first bearing faces 350A, 352A are substantially parallel to each other. The engagement of the first bearing faces 350A, 352A with the first rolling bearing element 333A constrains movement of the second part 310 relative to the first part 302 in a first direction (shown by arrow 'X1' in Fig. 36, which is a schematic cross-sectional view of the second track 344 along the plane shown by dashed line P1-P1 in Fig. 34). The first direction X1 extends perpendicular to the direction of helical movement of the second part 310 relative to the first part 302, and is generally normal to the first bearing faces 350A, 352A.

The second bearing face 351A of the first bearing region 331 faces towards the second bearing face 353A of the second bearing region 332, wherein the second rolling bearing element 333B is received between the second bearing faces 351A, 353A to engage both of the second bearing faces 351A, 353A simultaneously. The second bearing faces 351A, 353A are substantially parallel to each other. The engagement of the second bearing faces 351A, 353A with the second rolling bearing element 333B constrains movement of the second part 310 relative to the first part 302 in a second direction (shown by arrow 'Y1' in Fig. 37, which is a schematic cross-sectional view of the second track 344 along the plane shown by dashed line P2-P2 in Fig. 35). The second direction Y1 extends perpendicular to the direction of helical movement of the second part 310 relative to the first part 302, and is generally normal to the second bearing faces 351A, 353A.

A difference between the second helical bearing 240 of the first example and the second helical bearing 340 of the second embodiment is that only the first faces 350A, 352A or only the second faces 351A, 353A extend only partially along the length of the second track 344. The other one of the first faces 350A, 352A or second faces 351A, 353A extend the length of the second track 344. In the present example, the first faces 350A, 352A extend only partially along the length of the second track 344 and the second faces 351A, 353A extend along the length of the second track 344.

This means that only one recess 370A, 370B (or other feature to increase the width of the second track 344) is required in each of the first and second bearing regions 331, 332, which may make the first and second parts 302, 310 easier to manufacture, particularly if the first and second parts 302, 310 are manufactured using moulds.

The first bearing element 333A has a smaller diameter than the second bearing element 333B. The first faces 350A, 352A are spaced a first distance from each other that is substantially equal to the diameter of the first bearing element 333A. Therefore, the first rolling bearing element 333A in the second track 344 contacts both of the first faces 350A, 352A simultaneously to constrain movement of the second part 310 relative to the first part 302 in the first direction X1.

The second faces 351A, 353A are spaced a second distance from each other that is substantially equal to the diameter of the second bearing element 333B. Therefore, the second rolling bearing element 333B in the second track 344 contacts both of the second faces 351A, 353A simultaneously to constrain movement of the second part 310 relative to the first part 302 in the second direction Y1. The configuration of the recesses 370A, 370B is such that the second bearing element 333B does not contact both of the first faces 350A, 352A simultaneously and thus does not constrain movement of the second part 310 relative to the first part 302 in the first direction X1. Therefore, the second helical bearing 340 itself does not constrain rotation of the second part 310 relative to the first part 302 about the second rolling bearing element 333B.

The distance between the second faces 351A, 353A is larger than the distance between the first faces 350A, 352A. Therefore, the first bearing element 133A, which is smaller than the second bearing element 133B and thus also smaller than the distance between the second faces 351A, 353A, does not contact both of the second faces 351A, 353A simultaneously and thus does not constrain movement of the second part 310 relative to the first part 302 in the first direction Y1. Therefore, the second helical bearing 340 itself does not constrain rotation of the second part 310 relative to the first part 302 about the first rolling bearing element 333A.

As with the first embodiment and the first example, the first helical bearing (not shown) by itself does not constrain rotational movement of the second part 310 relative to the first part 302 and, in particular, does not constrain rotational movement of the second part 310 relative to the first part 302 about an axis perpendicular to the helical path of the second part 310 (i.e. the direction of movement shown by arrow M in Fig. 3). Similarly, the third helical bearing (not shown) by itself does not constrain rotational movement of the second part 310 relative to the first part 302 and, in particular, does not constrain rotational movement of the second part 310 relative to the first part 302 about an axis perpendicular to the helical path of the second part 310 (i.e. the direction of movement shown by arrow M in Fig. 3).

Each of the first, second and third helical bearings 340 itself permits rotation of the second part 310 relative to the first part 302. However, together the first, second and third helical bearings 340 (and additional helical bearings in embodiments that comprise more than three helical bearings) restrict rotational movement of the second part 310 relative to the first part 302 such that only helical motion of the second part 310 relative to the first part 302 is permitted.

The first, second and third helical bearings 340 each individually permitting rotation of the second part 310 relative to the first part 302, each about at least one respective rotational axis, makes it easier to manufacture the actuator assembly as explained previously.

The single bearing element of the first helical bearing (not shown) is offset from the second bearing element 333B of the second helical bearing 340. The single bearing element of the third helical bearing (not shown) is offset from the first bearing element 333A of the second helical bearing 340. Therefore, the distance between the single bearing element of the first helical bearing (and the second bearing element 333B of the second helical bearing 340 is increased and the distance between the single bearing element of the third helical bearing and the first bearing element 333A of the second helical bearing 340 is increased. This increases the tilt angle of the second part 310 relative to the first part 302 due to manufacturing tolerances, as explained above in reference to the first embodiment.

In the present example, single bearing element of the first helical bearing is located towards the top of the first track and the second bearing element 333B of the second helical bearing is located towards the bottom of the second track 344. In the present example, the single bearing element of the third helical bearing is located towards the bottom of the third track and the first bearing element 333A of the second helical bearing is located towards the top of the second track 344.

In the first example and the second embodiment, helical bearing arrangement comprises four bearing elements, wherein the second helical bearing comprises first and second bearing elements 233A, 333A, 233B, 333B that are both received in the second track 244B, 344B. However, it should be recognised that in alternative embodiments (not shown), the second track 244B, 3444B receives a single 233A, 333A bearing element and the other bearing element 233B, 333B is received in a further fourth track (not shown) of the helical bearing arrangement. As before, the bearing element 233A, 333A of the second track 244A is offset from the bearing element of the first track to reduce tilt. Similarly, the bearing element 233B, 333B of the fourth track is offset from the bearing element of the third track to reduce tilt.

The second and fourth tracks may be aligned in a direction along the helical path of the second part relative to the first part. In one such embodiment, a first end of the second track is located proximate to one of the bottom or top of the actuator assembly and a second end of the second track is located proximate to the middle of the actuator assembly. A first end of the fourth track is located proximate to the other one of the bottom or top of the actuator assembly and a second end of the fourth track is located proximate to the middle of the actuator assembly. Thus, the second ends of the second and fourth tracks are located in proximity to one another.

Alternatively, the second and fourth tracks may be spaced apart about the helical axis H of the actuator assembly. The first and second tracks may still be located such that the bearing elements within the tracks together permit an amount of tilt of the second part relative to the first part due to manufacturing tolerances, wherein the bearing elements of the first and second tracks are offset to reduce the amount of said tilt. Similarly, the third and fourth tracks may still be located such that the bearing elements within the tracks together permit an amount of tilt of the second part relative to the first part due to manufacturing tolerances, wherein the bearing elements of the third and fourth tracks are offset to reduce the amount of said tilt.

In some embodiments, the faces 150A, 150B, 150C, 151A, 151B, 151C, 152A, 152B, 152C, 153A, 153B extend helically around the helical axis H, that is following a line that is helical. In practical embodiments, the length of the faces may be short compared to the distance of the faces from the helical axis H, such that their shape is close to straight or even each being straight, provided that the one or more helical bearings of the helical bearing arrangement guide helical movement of the lens element with respect to the support structure. Plural helical bearings are typically present, located at different angular positions around the helical axis H, in which case the helical bearings have different orientations so that they cooperate and maintain adequate constraints to guide the helical movement of the lens element with respect to the support structure, even if the faces of an individual helical bearing are straight.

Referring now to Figs. 38 to 40, a third example of an actuator assembly 401 not forming part of the present invention is shown. As with the first embodiment and the first and second examples of Figs. 11 to 37, the actuator assembly 401 of the third example comprises first and second parts 402, 410 that are helically coupled by a helical bearing arrangement 420.

The helical bearing arrangement 420 arranged to guide helical movement of the second part 410 with respect to the first part 402 around a helical axis H, the helical movement of the second part 410 relative to the first part 402 having a pitch and a helix angle N. The helical movement of the second part 410 relative to the first part 402 is along a helical path shown by arrow 'M' in Fig. 39.

The helical bearing arrangement 420 comprises a plurality of helical bearings. In the present example, the helical bearing arrangement 420 comprises a first helical bearing 439, a second helical bearing (not shown) and a third helical bearing (not shown).

The first helical bearing 439 comprises a first track 444A and a bearing element 433A received in the first track 444A. The second and third helical bearings may be of a similar configuration, each comprising one or more bearing elements as has been previously described in relation to the first, second and third embodiments.

In some embodiments, the first and second helical bearings 439 are of the same type as the helical bearing shown in Fig. 2 and the third helical bearing is of the same type as the helical bearing shown in Fig. 3.

The first helical bearings 439 comprises first and second bearing regions. The first part 402 comprises the first bearing region and the second part 410 comprises the second bearing region. The first bearing region of the first helical bearing 439 comprises a first bearing face 450A and a second bearing face (not shown). The first and second bearing faces 450A are at substantially right angles to each other.

The second bearing surface of the first helical bearing 439 comprises a first bearing face 452A and a second bearing face (not shown). The first and second bearing faces are at substantially right angles to each other.

The first bearing faces 450A, 452A face towards each other and the second bearing faces (not shown) face towards each other, wherein the bearing element 433A is received between the first and second bearing faces 450A, 452A. The first bearing faces 450A, 452A are substantially parallel to each other. The second bearing faces are substantially parallel to each other.

The first and second bearing faces 450A, 452A are arranged such that the second part 410 follows a helical path M relative to the first part 402. The helical motion is at a helix angle N, which is the angle that helical path M intersects an axis (shown by dashed line 'R' in Figs. 38 and 39) that is parallel to the helical axis H at a radius extending to the centre of the bearing element 433A and, in the present example, is the helix angle N at a radius of 8 mm.

In some embodiments, the bearing elements of the actuator assembly 401 of the third example are offset along the helical axis H. In other embodiments, some or all of the bearing elements are aligned in a direction along the helical axis H.

The actuation apparatus 401 includes at least two SMA (shape memory alloy) actuator wires 460, 461 for the purpose of rotating the second part 410 relative to the first part 402. In the present example, the actuation apparatus 401 comprises first and second SMA actuator wires 460, 461. Each SMA actuator wire 460, 461 is connected between the first part 402 and the second part 410, for example as shown in Fig. 8. For example, the SMA actuator wires 460, 461 are connected to the first part 402 by respective crimp portions 462A, 462B and are connected to the second part 410 by one or more crimp portions 462C which crimp the SMA actuator wire 460 to provide both mechanical and electrical connection. However, it should be recognised that the actuator wire 460 may be connected to the first and second parts 402, 410 using any suitable connection. In the present example, the first and second actuator wires 460, 461 are connected by to the second part 410 by the same crimp portion 462C. However, in alternative embodiments (not shown) the actuator wires 460, 461 are connected to the second part 410 by different crimp portions. In some embodiments (not shown), the actuator wires 460, 461 are connected to the second part 410 on opposite sides of the helical axis H, or on the same side but axially spaced.

The first SMA actuator wire 460 extends at a first acute wire angle Q1 to a plane P3 normal the helical axis H. The second SMA actuator wire 461 extends at a second acute wire angle Q2 to a plane P3 normal to the helical axis H.

In the present example, the first SMA actuator wire 460 is at the first angle Q1 to the plane P3 and the second SMA actuator wire 461 is at the second angle Q2 to the same plane P3 as the first SMA actuator wire 460. However, in other embodiments (not shown) the first SMA actuator wire 460 extends at a first acute angle Q1 to a first plane normal the helical axis H and the second SMA actuator wire 461 extends at an acute angle Q2 to a second plane normal to the helical axis H that is offset from, but parallel to, the first plane.

In the present example, the first angle Q1 is equal to, or substantially equal to, the second angle Q2. However, in alternative embodiments the first and second angles Q1, Q2 are different.

The first SMA actuator wire 460 is offset from the helical axis. Thus, contraction of the first SMA actuator wire 460 to reduce the length of the wire 460 drives rotation of the second part 410 around the helical axis H in a first rotational direction.

The second SMA actuator wire 461 is offset from the helical axis. Thus, contraction of the first SMA actuator wire 461 to reduce the length of the wire 461 drives rotation of the second part 410 around the helical axis H in a second rotational direction opposite to the first rotational direction.

The drive mechanism can therefore be operated to contract the first SMA actuator wire 460 to rotate the second part 410 such that the second part 410 moves in a first direction along the helical axis H and can be operated to contract the second actuator wire 461 to rotate the second part 410 such that the second part 410 moves in a second direction along the helical axis H, opposite to the first direction.

The first actuator wire 460 is arranged such that it extends at a first angle Q1 to a plane P3 normal to the helical axis H to increase the gain of the actuator assembly 401. That is, when the first actuator wire 460 is contracted, this causes a larger rotation of the second part 410 relative to the first part 402 in the first rotational direction than if the first actuator wire 460 was parallel with the plane P3 normal to the helical axis H.

In addition, the first actuator wire 460 extends from the second part 410 at an acute angle Q3 relative to the path M of helical movement of the second part 410 relative to the first part 402. In particular, the first actuator wire 460 extends at an angle Q3 relative to the helical path M of the portion of the second part 410 to which the first actuator wire 460 is connected via the connection 462C. This has been found to increase the gain of the actuator assembly 401. Thus, when the first actuator wire 460 is contracted, this causes a larger rotation of the second part 410 relative to the first part 402 in the first rotational direction than if the first actuator wire 460 was parallel to the path M of helical movement of the second part 410 relative to the first part 402.

The first actuator wire 460 is inclined relative to the plane P3 normal to the helical axis H in such a way as to increase the rotation of the second part 410 relative to the first part 402 per unit change in length of the first actuator wire 460. This means that the first actuator wire 460 is not coincident with or parallel to the plane P3, is not coincident with or parallel to the helical path M, and does not extend from the second part 410 at an angle between the plane P3 and the helical path M. Instead, in the arrangement shown in Fig. 40, the first actuator wire 460 extends from the second part 410 on an opposite side of the plane P3 to the helical path M to the portion of the helical path M that is circumferentially aligned with the first actuator wire 460. However, in the third example of Fig. 41, the first actuator wire 460 extends from the second part 410 on the same side of the plane P3 as the helical path M, but the angle Q1 between the first actuator wire 460 and the plane P3 is larger than the angle between the helical path M and the plane P3. The arrangement of Fig. 40 allows for a more compact actuator assembly 401 for a given gain because the angle Q1 between the first actuator wire 460 and the plane P3 normal to the helical axis H can be smaller than the arrangement of Fig. 41 to achieve a given gain.

The second actuator wire 461 is arranged such that it extends at a second angle Q2 to a plane P3 normal to the helical axis H to increase the gain of the actuator assembly 401. That is, when the second actuator wire 461 is contracted, this causes a larger rotation of the second part 410 relative to the first part 402 in the second rotational direction than if the second actuator wire 461 was parallel to the plane P3 normal to the helical axis H.

In addition, the second actuator wire 461 extends from the second part 410 at an acute angle Q4 relative to the path M of helical movement of the second part 410 relative to the first part 402. In particular, the second actuator wire 461 extends at an angle Q4 relative to the helical path M of the portion of the second part 410 to which the second actuator wire 461 is connected via the connection 462C. This has been found to increase the gain of the actuator assembly 401. Thus, when the second actuator wire 461 is contracted, this causes a larger rotation of the second part 410 relative to the first part 402 in the second rotational direction than if the second actuator wire 461 was parallel to the path M of helical movement of the second part 410 relative to the first part 402.

The second actuator wire 461 is inclined relative to the plane P3 normal to the helical axis H in such a way as to increase the rotation of the second part 410 relative to the first part 402 per unit change in length of the second actuator wire 461. This means that the second actuator wire 461 is not coincident with or parallel to the plane P3, is not coincident with or parallel to the helical path M, and does not extend from the second part 410 at an angle between the plane P3 and the helical path M. Instead, in the arrangement shown in Fig. 40, the second actuator wire 461 extends from the second part 410 on an opposite side of the plane P3 to the portion of the helical path M that is circumferentially aligned with the second actuator wire 461. However, in the alternative embodiment of Fig. 41, the second actuator wire 461 extends from the second part 410 on the same side of the plane P3 as the helical path M, but the angle Q2 between the second actuator wire 461 and the plane P3 is larger than the angle between the helical path M and the plane P3. The arrangement of Fig. 40 allows for a more compact actuator assembly 401 for a given gain because the angle Q2 between the second actuator wire 461 and the plane P3 normal to the helical axis H can be smaller than the arrangement of Fig. 41.

It has been found that a smaller pitch of the helical movement of the second part 410 relative to the first part 402 decreases the amount of tilt of the second part 410 relative to the first part 402 for a given manufacturing tolerance. The 'pitch' refers to the amount of axial movement of the second part 410 relative to the first part 402 along the helical axis H for one 360-degree rotation of the second part 410 relative to the first part 402. For instance, a pitch of 80 mm would mean that, for one complete rotation of the second part 410 relative to the first part 402, the second part 410 moves along the helical axis H by 80 mm (although it is not necessary that the actuator assembly 401 is configured such that second part 410 is actually able to rotate through an entire 360 degree range of motion).

It is therefore advantageous to decrease the size of the pitch in order to reduce the tilt angle between the central axes of the first and second parts 402, 410 in the event that the first or second parts 402, 410 is undersized or oversized. However, decreasing the pitch of the helical motion has been found to result in a smaller gain of the actuator assembly 401, meaning that there is less movement of the second part 410 relative to the first part 402 along the helical axis H for a given rotation of the second part 410. However, this is compensated for by the fact that the first and second actuator wires 460, 461 are inclined relative to a plane P3 normal to the helical axis H in such a way as to increase the rotation of the second part 410 relative to the first part 402 per unit change in length of each actuator wire 460, 461.

In particular, the helical movement of the second part 410 relative to the first part 402 has a helical pitch of less than 300 mm and, preferably, less than 200 mm, less than 100 mm, less than 90 mm, less than 80 mm, less than 70 mm, less than 60 mm or less than 50 mm.

In particular, the helical movement of the second part 410 relative to the first part 402 has a helical pitch of at least 20 mm and, preferably, at least 30 mm, 40 mm, 50 mm, 60 mm, 70 mm or 80 mm.

The helical bearing arrangement 420 is arranged such that rotation of the second part 410 relative to the first part 402 causes the second part 410 to move away from a first side of the first part 402, which in the present example is away from the bottom side of the first part 402.

The first actuator wire 460 being at a wire angle Q1 greater than zero increases the gain of the actuator assembly 401 such that, for a given motion of the first actuator wire 460 to drive the second part 410 in the first rotational direction, a larger movement of the second part 410 is achieved. The actuator wire 460 may extend from the second part 410 to the first part 410 at wire angle Q1 towards from the first side of the first part 402 such that the distance between the first actuator wire 460 and the first side reduces the further along the first actuator wire 460 from the second part 410.

The second actuator wire 461 being at a wire angle Q2 greater than zero increases the gain of the actuator assembly 401 such that, for a given motion of the second actuator wire 461 to drive the second part 410 in the second rotational direction, a larger movement of the second part 410 is achieved. The second actuator wire 461 may extend from the second part 410 to the first part 402 at wire angle Q2 away from the first side of the first part 402 such that the distance between the actuator wire 460 and the first side increases the further along the actuator wire 460 from the second part 410.

In particular, the first actuator wire 460 extends from the second part 410 towards a first side or end of the first part 402, and the second actuator wire 461 extends from the second part 410 towards a second side or end of the first part 402, wherein the second end is distal to the first end.

In particular, the helix angle N is increased to reduce tilt of the second part 410 relative to the first part 402, whereas the actuator wires 460, 461 are each at a respective wire angle Q1, Q2 to a plane P3 normal to the helical axis H to compensate for the reduced gain caused by increasing the helix angle N.

In particular, the helical movement of the second part 410 relative to the first part 402 has a helix angle N of at least 10 degrees at a radius of 8 mm from the helical axis H and, preferably at least 15 or 20 degrees at a radius of 8 mm from the helical axis H. The helix angle being at least 10 degrees and, preferably, at least 15 or 20 degrees, reduces an amount of tilt between the first and second parts 402, 410 that may be introduced due to manufacturing tolerances of the first and second parts 402, 410.

In particular, the helical movement of the second part 410 relative to the first part 402 has a helix angle of less than or equal to 45 degrees at a radius of 8 mm to the helical axis H and, preferably less than or equal to 40 or 35 degrees at a radius of 8 mm to the helical axis H.

In particular, the wire angle Q1 of the first actuator wire 460 relative the plane P3 is at least 3 degrees and, preferably, is at least 5 degrees, at least 6 degrees, at least 9 degrees, at least 12 degrees or at least 15 degrees. In some embodiments, the wire angle Q1 of the first actuator wire 460 relative the plane P3 is in the range of 3 degrees to 15 degrees.

In particular, the wire angle Q2 of the second actuator wire 461 relative the plane P3 is at least 3 degrees and, preferably, is at least 5 degrees, at least 6 degrees, at least 9 degrees, at least 12 degrees or at least 15 degrees. In some embodiments, the wire angle Q2 of the second actuator wire 461 relative the plane P3 is in the range of 3 degrees to 15 degrees.

In particular, each actuator wire 460, 461 extends from the second part 410 at the same wire angle Q1, Q2. In other embodiments, one or more of the actuator wires 460, 461 extends from the second part 410 at a different wire angle Q1, Q2 to at least one other of the actuator wires 460, 461.

In particular, the second part 410 is moveable relative to the first part 402 about a range of helical movement, wherein the wire angles Q1, Q2 are measured with the second part 410 at the mid-point of the range of helical movement. That is, the second part 410 is moveable relative to the first part 402 between two extreme positions, the mid-point being located halfway between the extreme positions.

In particular, the drive mechanism is configured to move the second part 410 relative to the first part 402 between first and second extreme positions, wherein the first and second extreme positions are spaced along the helical axis H by at least 0.2mm and, preferably, at least 0.5mm, at least 1mm, at least 2mm, at least 3mm or more.

In particular, each actuator wire 460, 461 produces substantially the same rotation of the second part 410 relative to the first part 402 per unit change in the length of actuator wire 460, 461.

In particular, the drive mechanism comprises three, four, five, six or more SMA actuator wire (not shown).

The actuator assembly may be any type of assembly that comprises a first part and a second part movable with respect to the first part. The actuator assembly may be, or may be provided in, any one of the following devices: a smartphone, a protective cover or case for a smartphone, a functional cover or case for a smartphone or electronic device, a camera, a foldable smartphone, a foldable smartphone camera, a foldable consumer electronics device, a camera with folded optics, an image capture device, an array camera, a 3D sensing device or system, a servomotor, a consumer electronic device (including domestic appliances such as vacuum cleaners, washing machines and lawnmowers), a mobile or portable computing device, a mobile or portable electronic device, a laptop, a tablet computing device, an e-reader (also known as an e-book reader or e-book device), a computing accessory or computing peripheral device (e.g. mouse, keyboard, headphones, earphones, earbuds, etc.), an audio device (e.g. headphones, headset, earphones, etc.), a security system, a gaming system, a gaming accessory (e.g. controller, headset, a wearable controller, joystick, etc.), a robot or robotics device, a medical device (e.g. an endoscope), an augmented reality system, an augmented reality device, a virtual reality system, a virtual reality device, a wearable device (e.g. a watch, a smartwatch, a fitness tracker, etc.), a drone (aerial, water, underwater, etc.), an aircraft, a spacecraft, a submersible vessel, a vehicle, and an autonomous vehicle (e.g. a driverless car), a tool, a surgical tool, a remote controller (e.g. for a drone or a consumer electronics device), clothing (e.g. a garment, shoes, etc.), a switch, dial or button (e.g. a light switch, a thermostat dial, etc.), a display screen, a touchscreen, a flexible surface, and a wireless communication device (e.g. near-field communication (NFC) device). It will be understood that this is a non-exhaustive list of example devices.

The actuator assembly described herein may be used in devices/systems suitable for image capture, 3D sensing, depth mapping, aerial surveying, terrestrial surveying, surveying in or from space, hydrographic surveying, underwater surveying, scene detection, collision warning, security, facial recognition, augmented and/or virtual reality, advanced driver-assistance systems in vehicles, autonomous vehicles, gaming, gesture control/recognition, robotic devices, robotic device control, touchless technology, home automation, medical devices, and haptics.

## Claims

1. An actuator assembly (101) comprising:
a first part (102);
a second part (110); and,
a helical bearing arrangement (120) arranged to guide helical movement of the second part with respect to the first part around a helical axis, the helical bearing arrangement comprising first (139) and second (140) helical bearings,
wherein the first helical bearing comprises a first track (144A) and a first bearing element (133A) received in the first track, the second helical bearing comprises a second track (144B) and a second bearing element (133B) received in the second track, and the first track (144A) and the second track (144B) overlap in a direction along the helical axis (H),
**characterised in that** the first and second bearing elements are offset in a direction along the helical axis (H) that increases the distance between the first and second bearing elements compared to a situation in which the first and second bearing elements are not offset in a direction along the helical axis.

2. An actuator assembly (101) according to claim 1, wherein only a single bearing element in the first track (144A) constrains movement of the second part (110) relative to the first part (102) in at least a first direction and/or wherein only a single bearing element in the second track constrains movement of the second part relative to the first part in at least a second direction.

3. An actuator assembly (101) according to claim 1 or claim 2, wherein the first helical bearing (139) itself permits rotational movement of the second part (110) relative to the first part (102) about at least a first axis of rotation, and wherein the second helical bearing (140) itself permits rotational movement of the second part relative to the first part about at least a second axis of rotation, optionally wherein the helical bearing arrangement constrains rotational movement of the second part relative to the first part about the first and second axes of rotation.

4. An actuator assembly according to any one of the preceding claims, wherein the helical bearing arrangement (120) further comprises a third helical bearing (141) comprising a third track (144C) and a third bearing element (133C) received in the third track, optionally wherein the first helical bearing (139) is spaced apart from the second helical bearing (140) by a first angle about the helical axis (H), and wherein the third helical bearing (141) is spaced apart from the second helical bearing by a second angle about the helical axis substantially equal to the first angle.

5. An actuator assembly according to claim 4, wherein the first (133A) and/or second (133B) bearing element is offset from the third bearing element (133C) in a direction along the helical axis (H) that increases the distance between the first and/or second bearing element and the third bearing element as compared to a situation in which the first and/or second bearing element is not offset from the third bearing element in a direction along the helical axis, optionally wherein only a single bearing element in the third track (144C) constrains movement of the second part (110) relative to the first part (102) in at least a third direction.

6. An actuator assembly according to claim 4 or claim 5, wherein the second helical bearing (140) itself permits rotational movement of the second part (110) relative to the first part (102) about at least a third axis of rotation, and wherein the third helical bearing (141) itself permits rotational movement of the second part relative to the first part about at least a fourth axis of rotation, optionally wherein the helical bearing arrangement (120) constrains rotational movement of the second part relative to the first part about the third and fourth axes of rotation.

7. An actuator assembly according to any one of claims 4 to 6, wherein the third helical bearing (141) comprises one bearing element in total.

8. An actuator assembly according to any one of the preceding claims, wherein the first helical bearing (139) comprises one bearing element in total.

9. An actuator assembly according to any one of the preceding claims, wherein the second helical bearing (140) comprises one bearing element in total, optionally wherein the first (133A) and third (133C) bearing elements are offset from the second bearing (133B) element in opposite directions along the helical axis (H).

10. An actuator assembly (101) according to any one of claims 4 to 8, wherein the actuator assembly further comprises a fourth bearing element, optionally wherein the second helical bearing (140) comprises the fourth bearing element, optionally wherein the third (133C) and fourth bearing elements are offset in a direction along the helical axis (H).

11. An actuator assembly (101) according to any one of the preceding claims, wherein a first bearing region (131) is provided on the first part (102) and a second bearing region (132) is provided on the second part (110) , wherein the second track (144B) is provided between the first and second bearing regions, optionally wherein the first bearing region comprises first and second bearing faces and the second bearing region comprises first and second bearing faces, optionally wherein the first bearing faces generally oppose each other and the second baring faces generally oppose each other, optionally wherein the first bearing faces are configured to abut the second bearing element (133B).

12. An actuator assembly (101) according to any one of the preceding claims, comprising one or more positioning elements (160) that are located in one or each of the tracks (144A, 144B, 144C), optionally wherein at least one of the positioning elements comprises a positioning ball bearing (160) that has a smaller diameter than the bearing element of the track in which the positioning element is located.

13. An actuator assembly (101) according to any one of the preceding claims, wherein the second part (110) comprises a moveable mount and, preferably, a movable lens mount.

14. An actuator assembly (101) according to any one of the preceding claims, wherein the actuator assembly is a shape memory alloy actuator.

15. An autofocus system comprising the actuator assembly (101) according to any one of the preceding claims.

16. A camera system comprising:
the actuator assembly of any one of claims 1 to 15;
an image sensor (3); and
a lens system;
wherein the image sensor is mounted to one of the first part (102) and
the second part (110), and
wherein the lens system is mounted to the other one of the first part (102) and second part (110).

## Patentansprüche

1. Aktuatorbaugruppe (101), umfassend:
ein erstes Teil (102);
ein zweites Teil (110); und
eine Schraubenlageranordnung (120), die angeordnet ist, um die Schraubenbewegung des zweiten Teils relativ zu dem ersten Teil um eine Schraubenachse zu führen, wobei die Schraubenlageranordnung ein erstes (139) und ein zweites (140) Schraubenlager umfasst,
wobei das erste Schraubenlager eine erste Spur (144A) und ein erstes Lagerelement (133A) umfasst, das in der ersten Spur aufgenommen ist, das zweite Schraubenlager eine zweite Spur (144B) und ein zweites Lagerelement (133B) umfasst und sich die erste Spur (144A) und die zweite Spur (144B) in einer Richtung entlang der Schraubenachse (H) überlappen,
**dadurch gekennzeichnet, dass** das erste und das zweite Lagerelement in einer Richtung entlang der Schraubenachse (H) versetzt sind, was den Abstand zwischen dem ersten und dem zweiten Lagerelement im Vergleich zu einer Situation vergrößert, in der das erste und das zweite Lagerelement in einer Richtung entlang der Schraubenachse nicht versetzt sind.

2. Aktuatorbaugruppe (101) nach Anspruch 1, wobei nur ein einziges Lagerelement in der ersten Spur (144A) die Bewegung des zweiten Teils (110) relativ zu dem ersten Teil (102) in wenigstens einer ersten Richtung begrenzt und/oder wobei nur ein einziges Lagerelement in der zweiten Spur die Bewegung des zweiten Teils relativ zu dem ersten Teil in wenigstens einer zweiten Richtung einschränkt.

3. Aktuatorbaugruppe (101) nach Anspruch 1 oder 2, wobei das erste Schraubenlager (139) selbst eine Drehbewegung des zweiten Teils (110) relativ zu dem ersten Teil (102) um wenigstens eine erste Drehachse zulässt und wobei das zweite Schraubenlager (140) selbst eine Drehbewegung des zweiten Teils relativ zu dem ersten Teil um wenigstens eine zweite Drehachse zulässt, wobei die Schraubenlageranordnung optional die Drehbewegung des zweiten Teils relativ zu dem ersten Teil um die erste und zweite Drehachse begrenzt.

4. Aktuatorbaugruppe nach einem der vorstehenden Ansprüche, wobei die Schraubenlageranordnung (120) ferner ein drittes Schraubenlager (141) umfasst, das eine dritte Spur (144C) und ein drittes Lagerelement (133C) umfasst, das in der dritten Spur aufgenommen ist, optional wobei das erste Schraubenlager (139) von dem zweiten Schraubenlager (140) um einen ersten Winkel um die Schraubenachse (H) beabstandet ist, und wobei das dritte Schraubenlager (141) von dem zweiten Schraubenlager um einen zweiten Winkel um die Schraubenachse, der im Wesentlichen dem ersten Winkel entspricht, beabstandet ist.

5. Aktuatorbaugruppe nach Anspruch 4, wobei das erste (133A) und/oder zweite (133B) Lagerelement gegenüber dem dritten Lagerelement (133C) in einer Richtung entlang der Schraubenachse (H) versetzt ist, was den Abstand zwischen dem ersten und/oder zweiten Lagerelement und dem dritten Lagerelement im Vergleich zu einer Situation vergrößert, in der das erste und/oder das zweite Lagerelement von dem dritten Lagerelement in einer Richtung entlang der Schraubenachse nicht versetzt ist, optional wobei nur ein einziges Lagerelement in der dritten Laufbahn (144C) die Bewegung des zweiten Teils (110) relativ zu dem ersten Teil (102) in wenigstens einer dritten Richtung begrenzt.

6. Aktuatorbaugruppe nach Anspruch 4 oder 5, wobei das zweite Schraubenlager (140) selbst eine Drehbewegung des zweiten Teils (110) relativ zu dem ersten Teil (102) um wenigstens eine dritte Drehachse zulässt und wobei das dritte Schraubenlager (141) selbst eine Drehbewegung des zweiten Teils relativ zu dem ersten Teil um wenigstens eine vierte Drehachse zulässt, wobei die Schraubenlageranordnung (120) optional die Drehbewegung des zweiten Teils relativ zu dem ersten Teil um die dritte und vierte Drehachse einschränkt.

7. Aktuatorbaugruppe nach einem der Ansprüche 4 bis 6, wobei das dritte Schraubenlager (141) insgesamt ein Lagerelement umfasst.

8. Aktuatorbaugruppe nach einem der vorstehenden Ansprüche, wobei das erste Schraubenlager (139) insgesamt ein Lagerelement umfasst.

9. Aktuatorbaugruppe nach einem der vorstehenden Ansprüche, wobei das zweite Schraubenlager (140) insgesamt ein Lagerelement umfasst, wobei das erste (133A) und das dritte (133C) Lagerelement optional von dem zweiten Lager (133B) Element in gegenüberliegenden Richtungen entlang der Schraubenachse (H) versetzt sind.

10. Aktuatorbaugruppe (101) nach einem der Ansprüche 4 bis 8, wobei die Aktuatorbaugruppe ferner ein viertes Lagerelement umfasst, optional wobei das zweite Schraubenlager (140) das vierte Lagerelement umfasst, optional wobei das dritte (133C) und das vierte Lagerelement in einer Richtung entlang der Schraubenachse (H) versetzt sind.

11. Aktuatorbaugruppe (101) nach einem der vorstehenden Ansprüche, wobei ein erster Lagerbereich (131) an dem ersten Teil (102) bereitgestellt ist und ein zweiter Lagerbereich (132) an dem zweiten Teil (110) bereitgestellt ist, wobei die zweite Spur (144B) zwischen dem ersten und dem zweiten Lagerbereich bereitgestellt ist, wobei der erste Lagerbereich optional erste und zweite Lagerflächen umfasst und der zweite Lagerbereich erste und zweite Lagerflächen umfasst, optional wobei die ersten Lagerflächen im Allgemeinen einander gegenüberliegen und die zweiten Lagerflächen im Allgemeinen einander gegenüberliegen, optional wobei die ersten Lagerflächen dazu konfiguriert sind, an dem zweiten Lagerelement (133B) anzugrenzen.

12. Aktuatorbaugruppe (101) nach einem der vorstehenden Ansprüche, die ein oder mehrere Positionierungselemente (160) umfasst, die sich in einer oder jeder der Spuren (144A, 144B, 144C) befinden, wobei optional wenigstens eines der Positionierungselemente ein Positionierungskugellager (160) umfasst, das einen kleineren Durchmesser aufweist als das Lagerelement der Spur, in der sich das Positionierungselement befindet.

13. Aktuatorbaugruppe (101) nach einem der vorstehenden Ansprüche, wobei das zweite Teil (110) eine bewegliche Halterung und vorzugsweise eine bewegliche Linsenhalterung umfasst.

14. Aktuatorbaugruppe (101) nach einem der vorstehenden Ansprüche, wobei die Aktuatorbaugruppe ein Aktuator aus einer Formgedächtnislegierung ist.

15. Autofokussystem, das die Aktuatorbaugruppe (101) nach einem der vorstehenden Ansprüche umfasst.

16. Kamerasystem, das umfasst:
die Aktuatorbaugruppe nach einem der Ansprüche 1 bis 15;
einen Bildsensor (3); und
ein Linsensystem;
wobei der Bildsensor an einem des ersten Teils (102) und des zweiten Teils (110) montiert ist, und
wobei das Linsensystem an dem anderen des ersten Teils (102) und des zweiten Teils (110) montiert ist.

## Revendications

1. Ensemble actionneur (101) comprenant :
une première partie (102),
une deuxième partie (110), et
un agencement de paliers hélicoïdaux (120) agencé pour guider le mouvement hélicoïdal de la deuxième partie par rapport à la première partie sur un axe hélicoïdal, l'agencement de paliers hélicoïdaux comprenant un premier (139) et un deuxième (140) palier hélicoïdal ;
le premier palier hélicoïdal comprenant un premier chemin de roulement (144A) et un premier élément de palier (133A) reçu dans le premier chemin de roulement, le deuxième palier hélicoïdal comprenant un deuxième chemin de roulement (144B) et un deuxième élément de palier (133B) reçu dans le deuxième chemin de roulement, et le premier chemin de roulement (144A) et le deuxième chemin de roulement (144B) se chevauchant dans une direction de l'axe hélicoïdal (H),
**caractérisé en ce que** les premier et deuxième éléments de palier sont décalés dans une direction de l'axe hélicoïdal (H) permettant d'augmenter la distance entre les premier et deuxième éléments de palier en comparaison d'une situation dans laquelle les premier et deuxième éléments de palier ne sont pas décalés dans une direction de l'axe hélicoïdal.

2. Ensemble actionneur (101) selon la revendication 1, dans lequel un unique élément de palier du premier chemin de roulement (144A) contraint le mouvement de la deuxième partie (110) par rapport à la première partie (102) dans au moins une première direction et/ou un unique élément de palier du deuxième chemin de roulement contraint le mouvement de la deuxième partie par rapport à la première partie dans au moins une deuxième direction.

3. Ensemble actionneur (101) selon la revendication 1 ou la revendication 2, dans lequel le premier palier hélicoïdal (139) permet quant à lui le mouvement de rotation de la deuxième partie (110) par rapport à la première partie (102) sur au moins un premier axe de rotation, et le deuxième palier hélicoïdal (140) permet quant à lui un mouvement de rotation de la deuxième partie par rapport à la première partie sur au moins un deuxième axe de rotation, l'agencement de paliers hélicoïdaux contraignant éventuellement le mouvement de rotation de la deuxième partie par rapport à la première partie sur les premier et deuxième axes de rotation.

4. Ensemble actionneur selon l'une quelconque des revendications précédentes, dans lequel l'agencement de paliers hélicoïdaux (120) comprend en outre un troisième palier hélicoïdal (141) comprenant un troisième chemin de roulement (144C) et un troisième élément de palier (133C) reçu dans le troisième chemin de roulement, le premier palier hélicoïdal (139) étant éventuellement espacé du deuxième palier hélicoïdal (140) d'un premier angle sur l'axe hélicoïdal (H), et le troisième palier hélicoïdal (141) étant espacé du deuxième palier hélicoïdal d'un deuxième angle sur l'axe hélicoïdal sensiblement égal au premier angle.

5. Ensemble actionneur selon la revendication 4, dans lequel le premier (133A) et/ou le deuxième (133B) élément de palier sont décalés par rapport au troisième élément de palier (133C) dans une direction de l'axe hélicoïdal (H) permettant d'augmenter la distance entre le premier et/ou le deuxième élément de palier et le troisième élément de palier en comparaison d'une situation dans laquelle le premier et/ou le deuxième élément de palier ne sont pas décalés par rapport au troisième élément de palier dans une direction de l'axe hélicoïdal, un unique élément de palier du troisième chemin de roulement (144C) pouvant éventuellement contraindre le mouvement de la deuxième partie (110) par rapport à la première partie (102) dans au moins une troisième direction.

6. Ensemble actionneur selon la revendication 4 ou la revendication 5, dans lequel le deuxième palier hélicoïdal (140) permet quant à lui le mouvement de rotation de la deuxième partie (110) par rapport à la première partie (102) sur au moins un troisième axe de rotation, et le troisième palier hélicoïdal (141) permet quant à lui un mouvement de rotation de la deuxième partie par rapport à la première partie sur au moins un quatrième axe de rotation, l'agencement de paliers hélicoïdaux (120) contraignant éventuellement le mouvement de rotation de la deuxième partie par rapport à la première partie sur les troisième et quatrième axes de rotation.

7. Ensemble actionneur selon l'une quelconque des revendications 4 à 6, dans lequel le troisième palier hélicoïdal (141) comprend un seul élément de palier au total.

8. Ensemble actionneur selon l'une quelconque des revendications précédentes, dans lequel le premier palier hélicoïdal (139) comprend un seul élément de palier au total.

9. Ensemble actionneur selon l'une quelconque des revendications précédentes, dans lequel le deuxième palier hélicoïdal (140) comprend un seul élément de palier au total, les premier (133A) et troisième (133C) éléments de palier étant éventuellement décalés par rapport au deuxième élément de palier (133B) dans des sens opposés de l'axe hélicoïdal (H).

10. Ensemble actionneur (101) selon l'une quelconque des revendications 4 à 8, dans lequel l'ensemble actionneur comprend en outre un quatrième élément de palier, le deuxième palier hélicoïdal (140) comprenant éventuellement le quatrième élément de palier, et les troisième (133C) et quatrième éléments de palier étant éventuellement décalés dans une direction de l'axe hélicoïdal (H).

11. Ensemble actionneur (101) selon l'une quelconque des revendications précédentes, dans lequel une première région d'appui (131) est prévue sur la première partie (102) et une deuxième région d'appui (132) est prévue sur la deuxième partie (110), le deuxième chemin de roulement (144B) étant prévu entre les première et deuxième régions d'appui, la première région d'appui comprenant éventuellement des première et deuxième faces d'appui et la deuxième région d'appui comprenant éventuellement des première et deuxième faces d'appui, les premières faces d'appui étant éventuellement globalement opposées l'une à l'autre et les deuxièmes faces d'appui étant éventuellement globalement opposées l'une à l'autre, les premières faces d'appui étant éventuellement conçues pour venir en butée contre le deuxième élément de palier (133B).

12. Ensemble actionneur (101) selon l'une quelconque des revendications précédentes, comprenant un ou plusieurs éléments de positionnement (160) qui sont situés dans un ou plusieurs des chemins de roulement (144A, 144B, 144C), au moins l'un des éléments de positionnement comprenant éventuellement un palier à billes de positionnement (160) dont le diamètre est inférieur à celui de l'élément de palier du chemin de roulement dans lequel l'élément de positionnement est situé.

13. Ensemble actionneur (101) selon l'une quelconque des revendications précédentes, dans lequel la deuxième partie (110) comprend un support mobile et, de préférence, un support d'objectif mobile.

14. Ensemble actionneur (101) selon l'une quelconque des revendications précédentes, dans lequel l'ensemble actionneur est un actionneur à alliage à mémoire de forme.

15. Système de mise au point automatique comprenant l'ensemble actionneur (101) selon l'une quelconque des revendications précédentes.

16. Système de caméra comprenant :
l'assemblage actionneur selon l'une quelconque des revendications 1 à 15,
un capteur d'image (3), et
un système d'objectif ;
le capteur d'image étant monté sur une partie parmi la première partie (102) et la deuxième partie (110), et
le système d'objectif étant monté sur l'autre partie parmi la première partie (102) et la deuxième partie (110).
